# EUROPÄISCHE PATENTANMELDUNG

(11) **EP 3 751 251 A1**
(43) Veröffentlichungstag der Anmeldung: **16.12.2020**
(21) Anmeldenummer: 19290035.5
(22) Anmeldetag: 11.06.2019
(51) Int. Cl.: G01N 3/40, B23Q 41/02

(54) **PROBENTRANSFER MIT LEICHTER AUFFINDBARKEIT EINES ZIELBEREICHS**

(71) Anmelder: Anton Paar GmbH, 8054 Graz (AT)
(72) Erfinder: Coudert, Pierre-Jean, 69126 Brindas (FR); Godec-Schönbacher, Martin, 8045 Graz (AT); Pinno-Rath, Norbert, 8010 Graz (AT)
(74) Vertreter: Dilg, Haeusler, Schindelmann Patentanwaltsgesellschaft mbH

(57) **Zusammenfassung**

Bearbeitungs- und/oder Untersuchungsvorrichtung (100, 130) zum Bearbeiten und/oder Untersuchen einer Oberfläche einer Probe (107), wobei die Bearbeitungs- und/oder Untersuchungsvorrichtung (100, 130) eine Bearbeitungseinrichtung (102) zum Bearbeiten eines Zielbereichs (104) und/oder eine Untersuchungseinrichtung (132) zum Untersuchen eines Zielbereichs (104) an der Oberfläche der Probe (107), eine mechanische Trägerschnittstelle (106) als mechanische Referenz zum Tragen eines abnehmbar an der Trägerschnittstelle (106) anbringbaren Probenträgers (108) mit der Probe (107), und eine Datenquelle (110) zum Bereitstellen von Daten an besagte Bearbeitungs- und/oder Untersuchungsvorrichtung (100, 130) oder an eine andere Bearbeitungs- und/oder Untersuchungsvorrichtung (100, 130) aufweist, welche Daten für eine Position des Zielbereichs (104) bezogen auf besagte mechanische Referenz indikativ sind.

## Beschreibung

Die Erfindung betrifft Bearbeitungs- und/oder Untersuchungsvorrichtungen, eine Anordnung, ein Verfahren zum Bearbeiten und/oder Untersuchen einer Oberfläche einer Probe und eine Verwendung.

Ein Rasterkraftmikroskop (Atomic Force Microscope, AFM) dient hauptsächlich der lateral bzw. vertikal hochauflösenden Untersuchung von Oberflächen (insbesondere topographische Untersuchungen von Oberflächen). Dabei wird eine Messsonde (zum Beispiel ein Biegebalken, welcher auch als Cantilever bezeichnet wird) mit einer nanoskopisch kleinen Nadel (auch als Messspitze oder Messsondenspitze bezeichnet) über die Oberfläche geführt (d.h. gerastert bzw. gescannt) und die Auslenkung des Cantilevers, basierend auf der Wechselwirkung des Cantilevers mit der Oberfläche, detektiert. Je nach Oberflächenbeschaffenheit der Probe wird die Auslenkung des Cantilevers positionsabhängig bzw. die Nachführung der Sonde aufgezeichnet. Die Auslenkung des Cantilevers bzw. der Spitze kann kapazitiv oder mithilfe von optischen Sensoren gemessen werden. Diese Methode ermöglicht eine Strukturuntersuchung der Oberfläche der Probe bis hin zur atomaren Auflösung. In US 5,406,832 A wird der Aufbau eines AFM beschrieben.

Bekannt sind außerdem Instrumente zur mikro- bzw. nanoskopischen Bearbeitung von Oberflächen, wie beispielsweise Scratch Tester oder Nanoindenter. Nanoindenter sind beispielsweise in EP 1,828,744 B1 beschrieben, während US 8,261,600 B2 einen Scratch Tester offenbart.

Bei einem Transfer einer Probe zwischen zwei derartigen Instrumenten soll ein interessanter Bereich (zum Beispiel ein Artefakt) nach dem Transfer möglichst ohne großen Aufwand wieder gefunden werden. Beispielsweise möchte ein Benutzer in einem Scratch-Tester einen Kratzer an der Oberfläche der Probe erzeugen und diesen Kratzer anschließend in einem AFM untersuchen.

Allgemeiner Stand der Technik zur Handhabung von Proben in Bearbeitungs- und/oder Untersuchungsvorrichtungen ist in US 8,895,923, US 9,478,501, US 6,703,626, US 6,355,495, US 9,865,425, US 9,736,389, US 9,581,799, US 8,304,745, US 6,002,136, US 5,694,212 und JP 2002-350320 offenbart.

Es ist eine Aufgabe der vorliegenden Erfindung, einen einfachen Probentransfer zwischen Instrumenten zu ermöglichen, der auch robust gegen Verschmutzung oder Beschädigung sowie für große Proben bei hinreichend guter Wiederauffindbarkeit von Merkmalen auf der Probe erfolgen kann.

Diese Aufgabe wird durch die Gegenstände mit den Merkmalen gemäß den unabhängigen Patentansprüchen gelöst, Weitere Ausführungsbeispiele sind in den abhängigen Ansprüchen gezeigt.

Gemäß einem Ausführungsbeispiel der vorliegenden Erfindung ist eine Bearbeitungs- und/oder Untersuchungsvorrichtung (die auch als Ausgangs-Instrument bezeichnet werden kann) zum Bearbeiten und/oder Untersuchen einer Oberfläche einer Probe geschaffen, wobei die Bearbeitungs- und/oder Untersuchungsvorrichtung eine Bearbeitungseinrichtung zum Bearbeiten eines Zielbereichs und/oder eine Untersuchungseinrichtung zum Untersuchen eines Zielbereichs an der Oberfläche der Probe, eine mechanische Trägerschnittstelle als mechanische Referenz zum Tragen eines abnehmbar an der Trägerschnittstelle anbringbaren Probenträgers mit der Probe, und eine Datenquelle zum Bereitstellen von Daten an besagte Bearbeitungs- und/oder Untersuchungsvorrichtung oder an eine andere Bearbeitungs- und/oder Untersuchungsvorrichtung aufweist, welche Daten für eine Position des Zielbereichs (zum Beispiel bezogen auf besagte mechanische Referenz) indikativ sind.

Gemäß einem anderen Ausführungsbeispiel der vorliegenden Erfindung ist eine Bearbeitungs- und/oder Untersuchungsvorrichtung (die auch als Ziel-Instrument bezeichnet werden kann) zum Bearbeiten und/oder Untersuchen einer Oberfläche einer Probe bereitgestellt, wobei die Bearbeitungs- und/oder Untersuchungsvorrichtung eine Bearbeitungseinrichtung zum Bearbeiten eines Zielbereichs und/oder eine Untersuchungseinrichtung zum Untersuchen eines Zielbereichs an der Oberfläche der Probe, eine mechanische Trägerschnittstelle als mechanische Referenz zum Tragen eines abnehmbar an der Trägerschnittstelle anbringbaren Probenträgers mit der Probe, und eine Datenempfangseinrichtung zum Empfangen von Daten von der besagten Bearbeitungs- und/oder Untersuchungsvorrichtung oder von einer anderen Bearbeitungs- und/oder Untersuchungsvorrichtung aufweist, welche Daten für eine Position des Zielbereichs (zum Beispiel bezogen auf besagte mechanische Referenz) indikativ sind.

Gemäß einem weiteren exemplarischen Ausführungsbeispiel ist eine Anordnung zum Handhaben einer Probe bereitgestellt, die eine erste Bearbeitungs- und/oder Untersuchungsvorrichtung (zum Beispiel das oben beschriebene Ausgangs-Instrument) mit den oben beschriebenen Merkmalen und eine zweite Bearbeitungs- und/oder Untersuchungsvorrichtung (zum Beispiel das oben beschriebene Ziel-Instrument) mit den oben beschriebenen Merkmalen sowie einen Probenträger zum Tragen der Probe aufweist, der wahlweise an der Trägerschnittstelle der ersten Bearbeitungs- und/oder Untersuchungsvorrichtung oder an der Trägerschnittstelle der zweiten Bearbeitungs- und/oder Untersuchungsvorrichtung anbringbar ist, wobei die Datenquelle der ersten Bearbeitungs- und/oder Untersuchungsvorrichtung und die Datenempfangseinrichtung der zweiten Bearbeitungs- und/oder Untersuchungsvorrichtung derart aufeinander angepasst sind, dass die für eine Position des Zielbereichs indikativen Daten von der Datenquelle an die Datenempfangseinrichtung übermittelbar sind.

Gemäß einem weiteren exemplarischen Ausführungsbeispiel ist ein Verfahren zum Bearbeiten und/oder Untersuchen einer Oberfläche einer Probe geschaffen, wobei das Verfahren ein Bearbeiten und/oder Untersuchen eines Zielbereichs an der Oberfläche der Probe mittels einer ersten Bearbeitungs- und/oder Untersuchungsvorrichtung, wobei ein Probenträger mit der Probe während des Bearbeitens und/oder Untersuchens an der ersten Bearbeitungs- und/oder Untersuchungsvorrichtung angebracht ist, ein nachfolgendes Überführen des Probenträgers zu einer zweiten Bearbeitungs- und/oder Untersuchungsvorrichtung zum Bearbeiten und/oder Untersuchen des Zielbereichs, und ein Übermitteln von für eine Position des Zielbereichs indikativen Daten von der ersten Bearbeitungs- und/oder Untersuchungsvorrichtung an die zweite Bearbeitungs- und/oder Untersuchungsvorrichtung aufweist, wobei zumindest eine der ersten Bearbeitungs- und/oder Untersuchungsvorrichtung und der zweiten Bearbeitungs- und/oder Untersuchungsvorrichtung eine mechanische Trägerschnittstelle als mechanische Referenz mit vorbekannter Position zum abnehmbaren Anordnen des Probenträgers daran aufweist.

Gemäß einem weiteren exemplarischen Ausführungsbeispiel wird zumindest eine Bearbeitungs- und/oder Untersuchungsvorrichtung (insbesondere werden mehrere Bearbeitungs-und/oder Untersuchungsvorrichtungen) mit den oben beschriebenen Merkmalen für zumindest eine der folgenden Operationen verwendet:
- Bearbeiten der Probe an einer ersten Bearbeitungs- und/oder Untersuchungsvorrichtung und nachfolgend Untersuchen der Probe an einer zweiten Bearbeitungs- und/oder Untersuchungsvorrichtung;
- Bearbeiten der Probe an einer ersten Bearbeitungs- und/oder Untersuchungsvorrichtung und nachfolgend Bearbeiten der Probe an einer zweiten Bearbeitungs- und/oder Untersuchungsvorrichtung;
- Untersuchen der Probe an einer ersten Bearbeitungs- und/oder Untersuchungsvorrichtung und nachfolgend Untersuchen der Probe an einer zweiten Bearbeitungs- und/oder Untersuchungsvorrichtung;
- Untersuchen der Probe an einer ersten Bearbeitungs- und/oder Untersuchungsvorrichtung, nachfolgend Bearbeiten der Probe, insbesondere an einer zweiten Bearbeitungs- und/oder Untersuchungsvorrichtung, und danach Untersuchen der Probe an der ersten oder einer dritten Bearbeitungs- und/oder Untersuchungsvorrichtung.

Im Rahmen der vorliegenden Anmeldung wird unter dem Begriff "Bearbeitungsvorrichtung" insbesondere ein Instrument oder eine Apparatur verstanden, mit der eine Oberfläche einer Probe bearbeitet, verändert, manipuliert oder modifiziert werden kann. Insbesondere kann unter diesem Bearbeiten das Erzeugen von einer oder mehreren Oberflächenveränderungen im Zielbereich der Probe verstanden werden, zum Beispiel unter Bilden eines Kratzers, einer Vertiefung, einer Erhebung oder einer anderen Veränderung des Oberflächenprofils oder der Oberflächeneigenschaften.

Im Rahmen der vorliegenden Anmeldung kann unter dem Begriff "Untersuchungsvorrichtung" jede Apparatur bzw. jedes Instrument verstanden werden, mit dem die Oberfläche der Probe insbesondere in dem Zielbereich analysiert, vermessen, charakterisiert oder detektiert werden kann. Zum Beispiel kann die Oberflächenuntersuchung eine optische, mechanische, elektrische oder sonst wie geartete Untersuchung (insbesondere Abtastung oder Detektion) der Probe, insbesondere im Zielbereich, umfassen.

Im Rahmen der vorliegenden Anmeldung kann unter dem Begriff "Trägerschnittstelle" eine spezifisch ausgebildete, insbesondere spezifisch geformte und/oder dimensionierte, Aufnahmeeinrichtung für einen transferierbaren Probenträger verstanden werden, die das Aufnehmen des Probenträgers in einer vorgebbaren, reproduzierbaren und/oder festen Anbringung ermöglicht. Zum Beispiel kann eine solche Trägerschnittstelle eine Vertiefung, Umrahmung oder sonstige Abgrenzung an und/oder in einem Basiskörper sein, die ein Anbringen eines Probenträgers nur an einer definierten Position und/oder nur mit einer definierten Orientierung ermöglicht. Für einen in anderer Weise positionierten, orientierten, dimensionierten und/oder geformten Probenträger kann eine Aufnahme an der Trägerschnittstelle hingegen mechanisch verunmöglicht sein. An einer solchen Trägerschnittstelle kann der Probenträger in reversibel abnehmbarer Weise angebracht werden und jederzeit zu einem anderen Ort transferiert werden.

Im Rahmen der vorliegenden Anmeldung kann unter dem Begriff "Probenträger" ein Körper verstanden werden, an dem eine zu bearbeitende bzw. zu untersuchende Probe angebracht ist.

Im Rahmen der vorliegenden Anmeldung kann unter dem Begriff "Datenquelle" eine Einrichtung verstanden werden, die zum (insbesondere elektrischen, elektromagnetischen oder auch nur rein visuellen) Bereitstellen, Speichern und/oder Übertragen von Daten ausgebildet sein kann. Diese Daten können einen Zielbereich der Probe hinsichtlich seiner räumlichen Position an dem Probenträger definieren, und zwar bevorzugt bezogen auf Koordinaten einer zugehörigen Trägerschnittstelle als mechanische Referenz.

Im Rahmen der vorliegenden Anmeldung kann unter dem Begriff "Datenempfangseinrichtung" eine (zum Beispiel elektrische, elektromagnetische oder von einem Benutzer händisch betätigbare) Eingabeschnittstelle zum Eingeben von Daten sein, die indikativ für den Zielbereich der Probe sein können.

Gemäß einem exemplarischen Ausführungsbeispiel kann in einfacher und fehlerrobuster Weise ein Transfer eines Probenträgers von einer Bearbeitungs- und/oder Untersuchungsvorrichtung zu einer anderen (oder alternativ zurück zu derselben) Bearbeitungs- und/oder Untersuchungsvorrichtung durchgeführt werden, wobei ein an der als Ausgangspunkt fungierenden Bearbeitungs- und/oder Untersuchungsvorrichtung untersuchter bzw. bearbeiteter Zielbereich der Probe an der als Zielpunkt fungierenden Bearbeitungs- und/oder Untersuchungsvorrichtung schnell und einfach wiedergefunden werden kann. Gemäß einem exemplarischen Ausführungsbeispiel der Erfindung kann dies erreicht werden, indem an zumindest einer der Bearbeitungs- und/oder Untersuchungsvorrichtungen eine Trägerschnittstelle zum definierten und räumlich vorbekannten Aufnehmen des Probenträgers vorgesehen wird. Wenn die Position und die Orientierung ihrer Trägerschnittstelle der zugeordneten Bearbeitungs- und/oder Untersuchungsvorrichtung vorbekannt ist (insbesondere dort gespeichert ist) und ein Anbringen des Probenträgers an dieser Trägerschnittstelle nur an definierter und vorgegebener Position und vorzugsweise auch nur in definierter und vorgegebener Orientierung möglich ist, kann bei bekannten räumlichen Verhältnissen der jeweils anderen Bearbeitungs- und/oder Untersuchungsvorrichtung ein Wiederauffinden des Zielbereichs leicht erfolgen. Bevorzugt ist sowohl an der Ausgangs- bzw. Ursprungsposition als auch an der Ziel- bzw. Endposition des Probenträgers eine jeweilige Trägerschnittstelle vorgesehen, so dass die bloße Bekanntgabe der Position des Zielbereichs der Probe in Bezug auf die Trägerschnittstelle an der Ausgangsposition an die Vorrichtung an der Endposition ausreicht, um dort durch Kombination dieser bekanntgegebenen Position des Zielbereichs mit der an der Ziel-Vorrichtung vorbekannten (zum Beispiel dort gespeicherten) Position ihrer Trägerschnittstelle der Zielbereich der Probe schnell und einfach aufzufinden. Alternativ ist es möglich, eine mechanische Trägerschnittstelle nur an einer der beiden Vorrichtungen vorzusehen und an der jeweils anderen Vorrichtung Positionsinformation durch (zum Beispiel optische oder haptische) Marker oder dergleichen zu erfassen. Insbesondere bei Vorsehen (vorzugsweise identischer) mechanischer Trägerschnittstellen an beiden Bearbeitungs- und/oder Untersuchungsvorrichtungen kann durch bloße Übermittlung der Position des Zielbereichs von der als Ausgangspunkt fungierenden Bearbeitungs- und/oder Untersuchungsvorrichtung an die als Zielpunkt fungierenden Bearbeitungs- und/oder Untersuchungsvorrichtung von Letzterer die Position des Zielbereichs schnell aufgefunden werden. In der zuletzt beschriebenen Ausgestaltung mit Trägerschnittstellen als mechanische Referenz an beiden Bearbeitungs- und/oder Untersuchungsvorrichtungen ist ein Vorsehen bzw. Auslesen von Markern an dem Probenträger vollkommen entbehrlich. Bei Vorsehen von nur einer mechanischen Trägerschnittstelle kann zumindest an einer der beiden Bearbeitungs- und/oder Untersuchungsvorrichtungen eine solche Markerdetektion zur Identifizierung eines Zielbereichs der Probe entfallen. Dazu ist es vorteilhaft, wenn die Markerposition und -orientierung in Bezug zur Trägerschnittstelle bekannt ist. Auf diese Weise kann einfach und fehlerrobust an der Zielposition der Zielbereich der Probe wiederaufgefunden werden. Anschaulich können Koordinaten des Zielbereichs der Probe an dem Probenträger im Koordinatensystem der jeweiligen Trägerschnittstelle vorab und unter Verwendung einer fest an der Bearbeitungs- und/oder Untersuchungsvorrichtung verbleibenden mechanischen Referenz angegeben und übermittelt werden.

Gemäß einem Ausführungsbeispiel der Erfindung kann ein jeweiliges der beiden Instrumente (d.h. der Bearbeitungs- und/oder Untersuchungsvorrichtungen) mit einem Probenträger (auch als Transfertisch bezeichnet) und einer Trägerschnittstelle (auch als Probenschnittstelle bezeichnet) versehen werden. Die Trägerschnittstelle kann fix im jeweiligen Instrument verbaut sein und stellt daher eine präzise mechanische Referenz dar. Der Probenträger kann samt Probe aus dem einen Instrument entnommen und auf die Trägerschnittstelle des anderen Instruments aufgesetzt werden, sodass die Position des Probenträgers in den Koordinatensystemen beider Instrumente wohl definiert ist. Ferner können die Koordinaten (d.h. Koordinaten-Daten) eines Zielbereichs der Probe (zum Beispiel eines Artefakts an der Probe, etwa ein dort gebildeter Kratzer) vom ersten Instrument (d.h. der als Ausgangspunkt fungierenden Bearbeitungs- und/oder Untersuchungsvorrichtung) zum zweiten Instrument (d.h. der als Zielpunkt fungierenden Bearbeitungs- und/oder Untersuchungsvorrichtung) übertragen werden.

Mit Vorteil können durch eine vorherige Kalibrierung die relativen Positionen aller für die Bearbeitung bzw. Untersuchung relevanten Komponenten der Bearbeitungs- und/oder Untersuchungsvorrichtungen (beispielsweise Indenter-Spitze, AFM-Sonde, Mikroskop, etc.) innerhalb eines Instruments mit Bezug auf die Trägerschnittstelle bestimmt werden. Damit sind auch die relativen Positionen aller für die Bearbeitung bzw. Untersuchung relevanten Komponenten aller beteiligten Bearbeitungs- und/oder Untersuchungsvorrichtungen in dem Trägerschnittstellen-festen Koordinatensystem bekannt oder bestimmbar. Eine solche Kalibration kann zum Beispiel einmalig werkseitig, bei erstmaliger Installation einer der Bearbeitungs- und/oder Untersuchungsvorrichtung oder zum Beispiel bei Verwendung auswechselbarer Sonden bei einem jeweiligen Sondenwechsel durchgeführt werden. Insbesondere kann mittels einer solchen Kalibration eine Korrelation zwischen einem Koordinatensystem einer jeweiligen Trägerschnittstelle und einem Koordinatensystem einer Bearbeitungs- und/oder Untersuchungssonde bestimmt werden. Wenn die Koordinaten des Zielbereichs (zum Beispiel eines Artefakts) in einem Instrument bekannt sind, so können damit in einfacher Weise seine Koordinaten im anderen Instrument bestimmt werden und der Zielbereich (zum Beispiel das Artefakt) wiedergefunden werden. Für diese Kalibrierung kann beispielsweise ein Referenztisch bzw. ein Referenzprobenträger mit Markierungen verwendet werden. Somit können zum Beispiel die Koordinaten des Zielbereichs (insbesondere des Artefakts) im ersten Instrument aufgrund der Position der Sonde relativ zu den anderen Komponenten bekannt sein. Aufgrund der Kalibration ist auch die relative Lage zwischen dem Zielbereich und allen Komponenten im zweiten Instrument bekannt. Somit ist nach Transfer der Koordinaten vom ersten Instrument ins zweite Instrument die Position sofort auffindbar. Anschaulich kann insbesondere in der als Ausgangspunkt fungierenden Bearbeitungs- und/oder Untersuchungsvorrichtung die Position des Probenträgers an der Trägerschnittstelle (als mechanische Referenz) bekannt sein und kann die Position der Probenbearbeitung am Probenträger (zum Beispiel durch eine Indentersonde) bekannt sein und damit auch in Bezug auf die Position des Probenträgers bekannt sein. Wird die relative Position des Zielbereichs zur Trägerschnittstelle von der als Ausgangspunkt fungierenden Bearbeitungs- und/oder Untersuchungsvorrichtung an die als Zielpunkt fungierende Bearbeitungs- und/oder Untersuchungsvorrichtung übermittelt, kann letztere Bearbeitungs- und/oder Untersuchungsvorrichtung aus der Kenntnis der Position der Trägerschnittstelle in Bezug auf ihre für die Bearbeitung bzw. Untersuchung relevanten Komponenten die Position des Zielbereichs in ihrem Koordinatensystem ermitteln und den Zielbereich somit schnell und einfach auffinden. Dazu kann unterstellt werden, dass die Lage des Zielbereichs in Bezug auf die Trägerschnittstelle in allen Bearbeitungs- und/oder Untersuchungsvorrichtungen im Wesentlichen identisch ist.

Somit kann es gemäß exemplarischen Ausführungsbeispielen der Erfindung entbehrlich sein, zum Ermitteln von Positionsdaten eines Zielbereichs der Probe Markierungen an der Probe selbst (insbesondere optisch) auszumessen. Stattdessen kann es ausreichend sein, eine mechanische (insbesondere formschlüssige) Passung zwischen dem transferierbaren Probenträger und der fix an der Bearbeitungs- und/oder Untersuchungsvorrichtung angebrachten Trägerschnittstelle mit vorbekannter Position zu verwenden, um die auf die Position der Trägerschnittstelle bezogene Position des Zielbereichs zu ermitteln und im Wege der Übermittlung entsprechender Daten entsprechende Positionsinformation an eine (zum Beispiel andere) Bearbeitungs- und/oder Untersuchungsvorrichtung zu übertragen.

Im Weiteren werden zusätzliche exemplarische Ausführungsbeispiele der Bearbeitungs- und/oder Untersuchungsvorrichtungen, der Anordnung, des Verfahrens und der Verwendung beschrieben.

Gemäß einem Ausführungsbeispiel der Erfindung kann die jeweilige Trägerschnittstelle insofern ortsfest ausgebildet sein, als dass sie - anders als der Probenträger - nicht zwischen unterschiedlichen Bearbeitungs- und/oder Untersuchungsvorrichtungen bewegt und überführt wird. Genauer gesagt ist die jeweilige Trägerschnittstelle relativ zu einer Stage der Bearbeitungs- und/oder Untersuchungsvorrichtungen ortsfest. Die Stage (und mit dieser die Trägerschnittstelle) kann jedoch innerhalb einer Bearbeitungs- und/oder Untersuchungsvorrichtung bewegt werden. Die Positionierung erfolgt zum Beispiel dadurch, dass die Trägerschnittstelle und/oder eine Sonde, etc., bewegt werden.

Gemäß einem Ausführungsbeispiel der Erfindung kann die Bearbeitungs- und/oder Untersuchungsvorrichtung, welche die Datenquelle aufweist, eine Datenermittlungseinrichtung aufweisen, die zum Ermitteln der für die Position des Zielbereichs indikativen Daten basierend auf vorbekannter Information hinsichtlich der Position der Trägerschnittstelle und basierend auf einer Position der Bearbeitungseinrichtung beim Bearbeiten des Zielbereichs und/oder der Untersuchungseinrichtung beim Untersuchen des Zielbereichs eingerichtet ist. Zum Beispiel aus einer Kalibrierung kann die Position einer Sonde zum Bearbeiten bzw. Untersuchen der Probe bekannt sein, wenn eine solche Sonde im Zielbereich ein Artefakt oder dergleichen an der Probe erzeugt bzw. analysiert. Zur Ermittlung der durch eine korrespondierende Datenquelle zu übermittelnden Daten betreffend die Position des Zielbereichs bezogen auf die mechanische Referenz ihrer Trägerschnittstelle können dann die aus der Kalibration vorbekannten Koordinaten der Trägerschnittstelle sowie die Sondenkoordinaten beim Bearbeiten bzw. Untersuchen im Zielbereich verwendet werden.

In entsprechender Weise kann auf der Datenempfangsseite die dortige Bearbeitungs- und/oder Untersuchungsvorrichtung, welche die Datenempfangseinrichtung aufweist, eine Datenermittlungseinrichtung aufweisen, die zum Ermitteln der für die Position des Zielbereichs indikativen Daten basierend auf vorbekannter Information hinsichtlich der Position ihrer Trägerschnittstelle und basierend auf den empfangenen Daten eingerichtet ist. Somit ist auf der Datenempfangsseite ein Wiederauffinden des Zielbereichs der Probe in einfacher Weise möglich.

Gemäß einem Ausführungsbeispiel der Erfindung kann die Trägerschnittstelle eine vorbekannte Position an der Bearbeitungs- und/oder Untersuchungsvorrichtung einnehmen, welche vorbekannte Position der Trägerschnittstelle zum Ermitteln der für die Position des Zielbereichs indikativen Daten verwendet wird. Die Position (beispielsweise in Form von Koordinaten) der Trägerschnittstelle an der jeweiligen Bearbeitungs- und/oder Untersuchungsvorrichtung kann somit vorbekannt sein, zum Beispiel in einem Datenträger der Bearbeitungs- und/oder Untersuchungsvorrichtung gespeichert sein. Ein (zum Beispiel optisches) Erfassen dieser Position (zum Beispiel unter Verwendung von Markern oder dergleichen) kann daher entbehrlich sein. Die zu übermittelnden Daten zur Charakterisierung der Position des Zielbereichs können auf die vorbekannte Position der Trägerschnittstelle als feste mechanische bzw. strukturelle Referenz bezogen sein.

Gemäß einem Ausführungsbeispiel der Erfindung kann die eine Datenquelle aufweisende Bearbeitungs- und/oder Untersuchungsvorrichtung zusätzlich eine Datenempfangseinrichtung zum Empfangen von Daten von der besagten Bearbeitungs- und/oder Untersuchungsvorrichtung oder von einer anderen Bearbeitungs- und/oder Untersuchungsvorrichtung aufweisen, welche Daten für eine Position des Zielbereichs indikativ sind. In entsprechender Weise kann gemäß einem Ausführungsbeispiel der Erfindung die eine Datenempfangseinrichtung aufweisende Bearbeitungs- und/oder Untersuchungsvorrichtung zusätzlich eine Datenquelle zum Bereitstellen von Daten an besagte Bearbeitungs- und/oder Untersuchungsvorrichtung oder an eine andere Bearbeitungs- und/oder Untersuchungsvorrichtung aufweisen, welche Daten für eine Position des Zielbereichs indikativ sind. Mit anderen Worten ist es möglich, dass eine jeweilige Bearbeitungs- und/oder Untersuchungsvorrichtung sowohl zum Empfangen als auch zum Senden besagter Positionsdaten ausgebildet ist und daher sowohl als Ausgangs-Instrument oder als Ziel-Instrument eingesetzt werden kann.

Gemäß einem Ausführungsbeispiel der Erfindung kann die Bearbeitungs- und/oder Untersuchungsvorrichtung oder die Anordnung den Probenträger zum Tragen der Probe aufweisen, der abnehmbar an der Trägerschnittstelle anbringbar ist. Somit kann der Probenträger direkt an der Trägerschnittstelle als mechanische Referenzposition angebracht werden, vorzugsweise so, dass auch die Orientierung des Probenträgers relativ zu der Trägerschnittstelle festgelegt ist, wenn der Probenträger an der Trägerschnittstelle mechanisch angebracht ist. Durch einen solchen Formschluss als Voraussetzung für das Anbringen des Probenträgers an der Trägerschnittstelle kann sichergestellt werden, dass auch ohne Durchführung von Markermessungen oder dergleichen an der Bearbeitungs- und/oder Untersuchungsvorrichtung ein Übermitteln der Koordinaten des Zielbereichs der Probe im Ausgangs-Instrument und ein Wiederauffinden dieses Zielbereichs im Ziel-Instrument möglich ist.

Gemäß einem Ausführungsbeispiel der Erfindung kann der Probenträger frei von optisch zu erfassenden Markierungen sein. Aufgrund des Vorsehens einer Trägerschnittstelle als vorbekannte mechanische Referenz mit vorbekannter und unveränderlicher Position, die auch eine Soll-Position des Probenträgers an der zugehörigen Bearbeitungs- und/oder Untersuchungsvorrichtung definiert, kann ein Vorsehen von optischen Markern an dem Probenträger und an der Probe sowie ein optisches Auslesen solcher Marker zum Wiederauffinden des Zielbereichs der Probe mit Vorteil entbehrlich sein.

Gemäß einem Ausführungsbeispiel der Erfindung können der Probenträger und/oder die Trägerschnittstelle derart ausgebildet sein, dass der Probenträger verschiebegesichert (und insbesondere im Wesentlichen ohne Spiel) an der Trägerschnittstelle anbringbar ist. Beispielsweise kann eine solche Verschiebesicherung mittels Aufbringens einer Vorspannkraft unter Verwendung von mindestens einem Vorspannelement (zum Beispiel eine mechanische Feder oder eine Anordnung von einander abstoßenden oder einander anziehenden Magneten) ausgebildet sein. Ein solches Vorspannelement kann zum Beispiel unter Verwendung von mindestens einem elastischen Kopplungselement realisiert werden. Mit anderen Worten können der Probenträger und die Trägerschnittstelle einer jeweiligen Bearbeitungs- und/oder Untersuchungsvorrichtung derart aufeinander angepasst sein, dass der Probenträger spielfrei an der Trägerschnittstelle der Bearbeitungs- und/oder Untersuchungsvorrichtung anbringbar ist und in eine gewünschte Soll-Position vorgespannt wird. Durch das im Wesentlichen vollständige Vermeiden von Spiel zwischen Probenträger und Trägerschnittstelle kann die Genauigkeit der Positionierung und daher der vorbekannten Koordinaten des Probenträgers an der Trägerschnittstelle weiter verbessert werden. Wenn ein oder mehrere elastische Koppelelemente, zum Beispiel mechanische Federn oder Magneten, den an der mechanischen Trägerschnittstelle angebrachten Probenträger in eine vorbestimmte Position drängen, kann die Positionsgenauigkeit und daher die Präzision der Wiederauffindung des Zielbereichs der Probe an der als Zielpunkt fungierenden Bearbeitungs- und/oder Untersuchungsvorrichtung weiter verbessert werden.

Gemäß einem Ausführungsbeispiel der Erfindung kann die Bearbeitungs- und/oder Untersuchungsvorrichtung eine Kalibrationseinrichtung zum Kalibrieren von Positionen zwischen der Bearbeitungseinrichtung (insbesondere einer Bearbeitungssonde der Bearbeitungseinrichtung) und/oder der Untersuchungseinrichtung einerseits und der Trägerschnittstelle andererseits aufweisen. Durch eine solche Kalibration können die Relativpositionen zwischen den relevanten Komponenten der Bearbeitungs- und/oder Untersuchungsvorrichtung untereinander ermittelt werden und zum Beispiel in einer Datenbank abgelegt werden. Wenn dann zum Beispiel mittels einer Bearbeitungssonde der Bearbeitungs- und/oder Untersuchungsvorrichtung (zum Beispiel einem Ritzer eines Nanoindenters oder eines Scratch Testers) ein Artefakt an der Probenoberfläche im Zielbereich erzeugt wird, kann durch die vorbekannte Position der zugehörigen Trägerschnittstelle und durch die mittels Kalibration bekannte Positionierung dieser Bearbeitungssonde die Position des Zielbereichs ermittelt werden. Entsprechende Daten können dann der als Zielpunkt fungierenden Bearbeitungs- und/oder Untersuchungsvorrichtung übermittelt werden, damit diese - insbesondere unter Verwendung der vorbekannten Position ihrer Trägerschnittstelle - den Zielbereich der Probe nach Montage an ihrer Trägerschnittstelle eindeutig auffinden kann.

Gemäß einem Ausführungsbeispiel der Erfindung kann die Kalibrationseinrichtung zum Kalibrieren basierend auf dem optischen Erfassen von Markierungen an der jeweiligen Bearbeitungs- und/oder Untersuchungsvorrichtung - insbesondere an deren Trägerschnittstelle und/oder an einem an der Trägerschnittstelle angebrachten Probenträger - eingerichtet sein. Mit Vorteil kann die beschriebene Kalibration also unter Verwendung von einem oder mehreren Markern an der Bearbeitungs- und/oder Untersuchungsvorrichtung selbst durchgeführt werden. Bevorzugt ist hierbei die Durchführung der Kalibrierung unter Verwendung von Markern, die an der Trägerschnittstelle und/oder an einem (Kalibrations-)Probenträger selbst angebracht sind oder die in deren unmittelbaren Umgebungsbereich angeordnet sind. Entsprechende Kalibrationsmessungen können zum Beispiel mittels einer optischen Detektionseinrichtung durchgeführt werden.

Alternativ oder ergänzend kann die Kalibrationseinrichtung zum Kalibrieren basierend auf dem Erfassen einer Oberflächentopologie an der Bearbeitungs- und/oder Untersuchungsvorrichtung, insbesondere an deren Trägerschnittstelle, eingerichtet sein. Stufen oder andere haptische Merkmale können zum Beispiel mittels einer AFM-Sonde einer Bearbeitungs- und/oder Untersuchungsvorrichtung zu Kalibrationszwecken ausgelesen werden.

Gemäß einem Ausführungsbeispiel der Erfindung kann die Kalibrationseinrichtung ausgebildet sein, der jeweiligen Datenermittlungseinrichtung für das Kalibrieren der Positionen indikative Information als Basis für das Ermitteln der Daten bereitzustellen. Das Ergebnis der Kalibrierung kann somit einer Datenermittlungseinrichtung bereitgestellt werden, damit diese die Position des Zielbereichs unter Verwendung von mittels der Kalibration gewonnener Positionsinformation berechnen kann.

Gemäß einem Ausführungsbeispiel der Erfindung kann die Datenquelle ausgebildet sein, die Position des Zielbereichs der Probe bezogen auf ein Koordinatensystem der Trägerschnittstelle zu übermitteln. Wenn die Daten zur räumlichen Charakterisierung des Zielbereichs der Probe auf ein Koordinatensystem der Trägerschnittstelle der die Daten sendenden Bearbeitungs- und/oder Untersuchungsvorrichtung bezogen sind und die Trägerschnittstelle der die Daten empfangenden (anderen oder gleichen) Bearbeitungs- und/oder Untersuchungsvorrichtung identisch zu der anderen Trägerschnittstelle ausgebildet ist, kann durch die auf das Koordinatensystem der Trägerschnittstelle bezogene Positionsangabe des Zielbereichs ein unmittelbares Wiederauffinden des Zielbereichs an der die Daten empfangenden Bearbeitungs- und/oder Untersuchungsvorrichtung ermöglicht werden. Dies ist eine besonders einfache, schnelle und zuverlässige Art der Bereitstellung von Daten zum Auffinden des Zielbereichs.

Gemäß einem Ausführungsbeispiel der Erfindung kann die Bearbeitungs- und/oder Untersuchungsvorrichtung zum Bearbeiten und/oder Untersuchen einer Oberfläche einer Mehrzahl von Proben ausgebildet sein, insbesondere alle angeordnet an einem gemeinsamen Probenträger. Zum Beispiel kann ein Probenträger mit einer Vielzahl von Proben (beispielsweise 30 Lackproben, die von einem Dosiergerät abgeschieden wurden) bestückt sein. Eine solche Mehrzahl von Proben kann beispielsweise durch eine Mehrzahl von Bearbeitungssonden und/oder Untersuchungssonden an dem Probenträger untersucht werden.

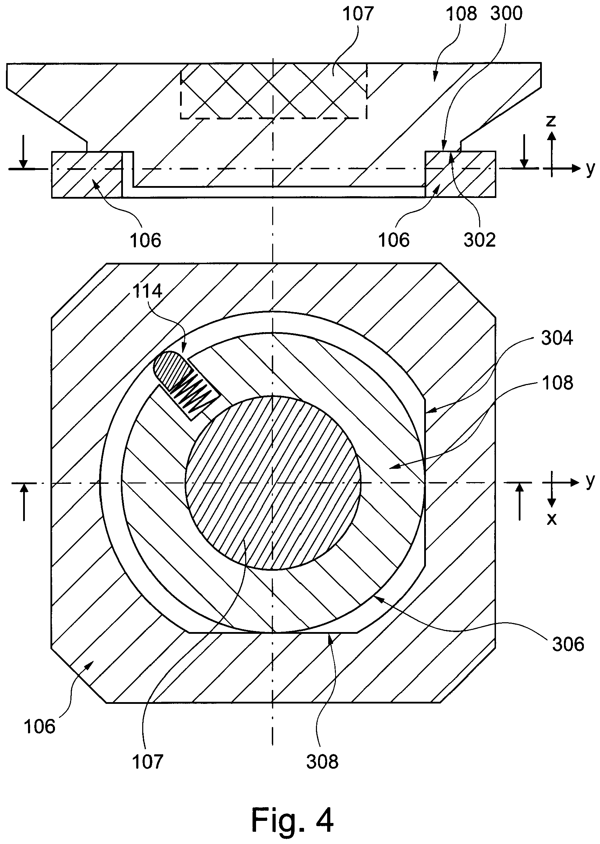

Gemäß einem Ausführungsbeispiel der Erfindung können die Trägerschnittstellen der als Ausgangspunkt fungierenden ersten Bearbeitungs- und/oder Untersuchungsvorrichtung und der als Zielpunkt fungierenden zweiten Bearbeitungs- und/oder Untersuchungsvorrichtung identisch in Bezug auf die Referenzflächen ausgebildet sein (vergleiche Figur 4). Bei einer hinsichtlich Form und Dimension identischen Ausgestaltung der Trägerschnittstellen der beteiligten Bearbeitungs- und/oder Untersuchungsvorrichtungen ist es möglich, durch Übertragung der Koordinaten des Zielbereichs bezogen auf die erste Bearbeitungs- und/oder Untersuchungsvorrichtung den Zielbereich an der zweiten Bearbeitungs- und/oder Untersuchungsvorrichtung unter Verwendung dieser Koordinaten unmittelbar wiederaufzufinden.

Gemäß einem Ausführungsbeispiel der Erfindung kann die Trägerschnittstelle der jeweiligen Bearbeitungs- und/oder Untersuchungsvorrichtung ausgebildet sein, eine Position und Orientierung des daran angebrachten Probenträgers festzulegen, insbesondere formschlüssig festzulegen. Mit Vorteil kann die Trägerschnittstelle so geformt und dimensioniert werden, dass der Probenträger nur in einer bestimmten Orientierung an der Trägerschnittstelle montiert werden kann. Dann ist sichergestellt, dass die Probe des Probenträgers an vorbestimmter Position und in vorbestimmter räumlicher Orientierung an der Bearbeitungs- und/oder Untersuchungsvorrichtung angebracht ist. Dadurch können Mehrdeutigkeiten bei der Übermittlung der Positionsdaten des Zielbereichs der Probe ausgeschlossen werden.

Gemäß einem Ausführungsbeispiel der Erfindung kann die Bearbeitungsvorrichtung als Indenter (insbesondere Nanoindenter), als Scratch Tester, als Halbleiterprozessiervorrichtung, als Abscheidevorrichtung, als Belichtungsvorrichtung oder als Ätzvorrichtung ausgebildet sein. Die Bearbeitungsvorrichtung kann also vorzugsweise ausgebildet sein, in einer Oberfläche der Probe - insbesondere im Zielbereich derselben - einen oder mehrere Kratzer zu erzeugen. Diese können bei Nanoindentern oder Scratch Testern so klein sein, dass an der Bearbeitungsvorrichtung üblicherweise selbst angeordnete Detektionseinrichtungen, zum Beispiel ein einfaches Mikroskop, ein Auffinden solcher Kratzer oder anderer Artefakte im Zielbereich nicht oder nicht mit der erforderlichen Präzision durchführen können. Allerdings können Ausführungsbeispiele der Erfindung auch für andere technische Bearbeitungen eingesetzt werden, wie zum Beispiel dem Abscheiden von Material, der Belichtung einer Schicht oder dem Ätzen einer Struktur, wie dies beispielsweise beim Prozessieren von Halbleiterwafern oder Halbleiterchips erfolgen kann.

Gemäß einem Ausführungsbeispiel der Erfindung kann die Untersuchungsvorrichtung als Rastersondenmikroskop (insbesondere als Rasterkraftmikroskop), als optisches Mikroskop oder als Spektrometer (insbesondere als Raman-Spektrometer) ausgebildet sein. Somit kann die Untersuchungsvorrichtung ausgebildet sein, den Zielbereich der Probe, der zum Beispiel zuvor von einer Bearbeitungsvorrichtung bearbeitet worden ist, zu analysieren bzw. auszumessen. Dies kann in optischer Weise (insbesondere mittels eines Mikroskops) oder in mechanischer Weise (beispielsweise mittels eines Rastersondenmikroskops) erfolgen. Gemäß einem bevorzugten Ausführungsbeispiel der Erfindung kann die Untersuchungsvorrichtung als Rastersondenmikroskop, insbesondere als Rasterkraftmikroskop, ausgebildet sein. Das Rasterkraftmikroskop, auch atomares Kraftmikroskop oder Atomkraftmikroskop (AFM) genannt, ist ein spezielles Rastersondenmikroskop. Es dient als Werkzeug in der Oberflächencharakterisierung und fungiert zur mechanischen Abtastung von Oberflächen auf der Nanometerskala. Andere Ausgestaltungen der Untersuchungsvorrichtung sind jedoch möglich, zum Beispiel im Rahmen von spektroskopischen Geräten.

Gemäß einem Ausführungsbeispiel der Erfindung können die Datenquelle und die Datenempfangseinrichtung ausgebildet sein, über eine, insbesondere drahtgebundene oder drahtlose, Kommunikationsverbindung die Daten von der Datenquelle an die Datenempfangseinrichtung zu übertragen. Anders ausgedrückt können Datenquelle und Datenempfangseinrichtung so konfiguriert sein, dass sie (zum Beispiel gemäß einem vorbestimmten Kommunikationsprotokoll) die für die Position des Zielbereichs indikativen Positionsdaten (insbesondere Koordinaten) selbsttätig übermitteln. Hierfür kann auch ein Kommunikationsnetzwerk eingesetzt werden, zum Beispiel ein Mobilfunknetz oder das öffentliche Internet. Eine Benutzeraktivität zum Übertragen der Daten und zum Wiederauffinden des Zielbereichs an der Bearbeitungs- und/oder Untersuchungsvorrichtung ist daher gemäß der beschriebenen Ausgestaltung entbehrlich. Für eine drahtgebundene Kommunikation kann zum Beispiel ein Kabel oder ein Lichtleiter verwendet werden. Für eine drahtlose Kommunikation kann zum Beispiel ein Mobilfunkstandard oder ein Industriestandard für die Funkübermittlung der Daten eingesetzt werden.

Gemäß einem Ausführungsbeispiel der Erfindung können die Datenquelle und die Datenempfangseinrichtung ausgebildet sein, über einen von einem Benutzer handhabbaren mobilen Datenspeicher die Daten von der Datenquelle an die Datenempfangseinrichtung zu übertragen. Beispielsweise kann ein solcher mobiler Datenspeicher ein USB-Stick, eine Diskette, eine SD-Karte, ein RFID-Tag, ein NFC-Tag oder ein Speicher eines Mobilfunkgeräts sein. Ein Benutzer muss dann nichts anderes tun, als den Datenspeicher zum Speichern der Daten mit der Datenquelle zu koppeln und nachfolgend den Datenspeicher mit der Datenempfangseinrichtung der anderen Bearbeitungs- und/oder Untersuchungsvorrichtung zu koppeln. Die gespeicherten Daten können dadurch an die Datenempfangseinrichtung übertragen werden.

Gemäß einem Ausführungsbeispiel der Erfindung kann der mobile Datenspeicher in den Probenträger integriert sein. Insbesondere kann der mobile Datenspeicher derart in den Probenträger integriert sein, dass bei Anordnen des Probenträgers an der Trägerschnittstelle der als Ausgangspunkt fungierenden Bearbeitungs- und/oder Untersuchungsvorrichtung die Daten von der Datenquelle auf den mobilen Datenspeicher des Probenträgers übertragen werden, und dass bei Anordnen des Probenträgers an der Trägerschnittstelle der als Zielpunkt fungierenden Bearbeitungs- und/oder Untersuchungsvorrichtung die Daten von dem mobilen Datenspeicher des Probenträgers an die Datenempfangseinrichtung übertragen werden. Gemäß dieser besonders bevorzugten Ausführungsform kann mit dem Transferieren des Probenträgers auch gleichzeitig der Datentransfer durchgeführt werden, ohne dass eine zusätzliche Benutzeraktivität erforderlich ist. Wenn der mobile Datenspeicher in dem Probenträger integriert ist, kann dieser bei Anordnen an der Trägerschnittstelle der als Ausgangspunkt fungierenden Bearbeitungs- und/oder Untersuchungsvorrichtung automatisch mit den Positionsdaten zum Lokalisieren des Zielbereichs bespielt werden. Wird der Probenträger von einem Benutzer dann an die Trägerschnittstelle der als Zielpunkt fungierenden Bearbeitungs- und/oder Untersuchungsvorrichtung überführt, wird automatisch auch der mobile Datenspeicher dorthin verbracht. Die Konfiguration kann dann vorzugsweise dergestalt sein, dass durch das bloße Einsetzen des Probenträgers in die Trägerschnittstelle der als Zielpunkt fungierenden Bearbeitungs- und/oder Untersuchungsvorrichtung auch eine Datenübermittlung von dem mobilen Datenträger an die Datenempfangseinrichtung erfolgt. Eine solche Vorgehensweise ist besonders fehlerrobust und einfach und macht auch das Ausbilden einer Kommunikationsschnittstelle zum direkten Kommunizieren zwischen den Bearbeitungs- und/oder Untersuchungsvorrichtungen entbehrlich.

Gemäß einem Ausführungsbeispiel der Erfindung kann der mobile Datenspeicher bevorzugt als (insbesondere drahtloser) Transponder ausgebildet sein, beispielsweise als RFID-Tag, NFC-Tag oder Bluetooth-Transponder. Insbesondere wenn der mobile Datenspeicher in den Probenträger integriert ist (zum Beispiel als RFID-Tag auf den Probenträger aufgebracht ist), kann ein Daten-Schreibgerät derart an der als Ausgangspunkt fungierenden Bearbeitungs- und/oder Untersuchungsvorrichtung angeordnet werden, dass beim Einsetzen des Probenträgers in die Trägerschnittstelle der besagten Bearbeitungs- und/oder Untersuchungsvorrichtung die für die Position des Zielbereichs indikativen und zu übermittelnden Daten in den mobilen Datenspeicher geschrieben werden können. Anders ausgedrückt kann der integrierte mobile Datenspeicher durch Anordnen des Probenträgers an der Trägerschnittstelle in einen Schreibabstand des Daten-Schreibgeräts gebracht werden und dadurch ein Speichern der Daten in dem Probenträger auslösen. In entsprechender Weise kann ein Daten-Lesegerät derart an der anderen Bearbeitungs- und/oder Untersuchungsvorrichtung angeordnet werden, dass beim Einsetzen des Probenträgers in die Trägerschnittstelle der anderen Bearbeitungs- und/oder Untersuchungsvorrichtung die für die Position des Zielbereichs indikativen und zu übermittelnden Daten aus dem mobilen Datenspeicher durch das Daten-Lesegerät ausgelesen werden können. Anders ausgedrückt kann der integrierte mobile Datenspeicher durch Anordnen des Probenträgers an der Trägerschnittstelle der anderen Bearbeitungs- und/oder Untersuchungsvorrichtung in einen Leseabstand des Daten-Lesegeräts gebracht werden und dadurch ein Auslesen der Daten aus dem Probenträger auslösen.

Es ist aber auch möglich, dass der mobile Datenträger zum Beispiel als USB Stick, als SD-Karte oder Diskette ausgebildet ist. Auch dies ermöglicht es einem Benutzer in einfacher Weise, Daten zwischen Bearbeitungs- und/oder Untersuchungsvorrichtungen zu transferieren.

Gemäß einem Ausführungsbeispiel der Erfindung können die Daten durch einen Benutzer von einer Benutzerschnittstelle der als Ausgangspunkt fungierenden Bearbeitungs- und/oder Untersuchungsvorrichtung an eine Benutzerschnittstelle der als Zielpunkt fungierenden Bearbeitungs- und/oder Untersuchungsvorrichtung übertragen werden. Gemäß einer solchen Ausgestaltung kann ein Benutzer an einer Benutzerschnittstelle (zum Beispiel über ein Display) mit den Positionsdaten des Zielbereichs versorgt werden. Wenn ein Benutzer diese Koordinaten dann an einer Eingabeschnittstelle (zum Beispiel über eine Tastatur) an der anderen Bearbeitungs- und/oder Untersuchungsvorrichtung eingibt, sind die entsprechenden Daten ebenfalls übermittelt.

Gemäß einem Ausführungsbeispiel der Erfindung kann das Verfahren, während des Bearbeitens und/oder Untersuchens mittels der als Ausgangspunkt fungierenden ersten Bearbeitungs- und/oder Untersuchungsvorrichtung, ein Anordnen des Probenträgers an einer mechanischen Trägerschnittstelle der ersten Bearbeitungs- und/oder Untersuchungsvorrichtung und, während des Bearbeitens und/oder Untersuchens mittels der als Zielpunkt fungierenden zweiten Bearbeitungs- und/oder Untersuchungsvorrichtung, ein Anordnen des Probenträgers an einer mechanischen Trägerschnittstelle der zweiten Bearbeitungs- und/oder Untersuchungsvorrichtung aufweisen. Gemäß einer solchen bevorzugten Ausgestaltung kann eine (vorzugsweise identisch geformte) Trägerschnittstelle an beiden Bearbeitungs- und/oder Untersuchungsvorrichtungen ausgebildet sein. Für einen Benutzer ist es dann in besonders intuitiver Weise ausreichend, den Probenträger von der einen Trägerschnittstelle an die andere Trägerschnittstelle zu verbringen. Weitere Aktivitäten zum Wiederauffinden des Zielbereichs durch den Benutzer sind dann nicht erforderlich, sondern können selbsttätig durch die Bearbeitungs- und/oder Untersuchungsvorrichtungen bewerkstelligt werden.

Gemäß einem anderen Ausführungsbeispiel der Erfindung kann das Verfahren, während des Bearbeitens und/oder Untersuchens mittels der als Ausgangspunkt fungierenden ersten Bearbeitungs- und/oder Untersuchungsvorrichtung oder während des Bearbeitens und/oder Untersuchens mittels der als Zielpunkt fungierenden zweiten Bearbeitungs- und/oder Untersuchungsvorrichtung, ein Anordnen eines Markierungen aufweisenden Probenträgers an einer mechanischen Trägerschnittstelle der ersten Bearbeitungs- und/oder Untersuchungsvorrichtung oder der zweiten Bearbeitungs- und/oder Untersuchungsvorrichtung, und, während des an der jeweils anderen Bearbeitungs- und/oder Untersuchungsvorrichtung durchgeführten Prozesses des Bearbeitens und/oder Untersuchens, ein Anordnen eines Markierungen aufweisenden Probenträgers an der ersten Bearbeitungs- und/oder Untersuchungsvorrichtung oder der zweiten Bearbeitungs- und/oder Untersuchungsvorrichtung aufweisen, die zum Auffinden der Zielposition nicht die mechanische Trägerschnittstelle als Referenz verwendet.

Gemäß einer solchen Ausgestaltung ist eine Trägerschnittstelle als feste mechanische Referenz nur an einer der beiden Bearbeitungs- und/oder Untersuchungsvorrichtungen vorgesehen. An der jeweils anderen Bearbeitungs- und/oder Untersuchungsvorrichtung kann in herkömmlicher Weise eine Positionsbestimmung mittels Markererkennung oder dergleichen erfolgen. Diese Ausgestaltung kann dann vorteilhaft sein, wenn eine bereits bestehende Bearbeitungs- und/oder Untersuchungsvorrichtung (zum Beispiel mit optischen Markern, wie sie beispielsweise bei Halbleiterbearbeitungsgeräten zum Einsatz kommen) mit einer eine Trägerschnittstelle aufweisenden anderen Bearbeitungs- und/oder Untersuchungsvorrichtung (zum Beispiel einem AFM) kompatibel gemacht werden soll.

Gemäß einem Ausführungsbeispiel der Erfindung kann das Verfahren ein Wiederauffinden des Zielbereichs an der Bearbeitungs- und/oder Untersuchungsvorrichtung unter Verwendung der übermittelten Daten aufweisen. Die übermittelten Daten können dann verwendet werden, um den Zielbereich an der Position der Bearbeitungs- und/oder Untersuchungsvorrichtung schnell und einfach sowie fehlerrobust aufzufinden. Hierzu werden die bekannten Informationen über die Position der Trägerschnittstelle an der Bearbeitungs- und/oder Untersuchungsvorrichtung mit den übermittelten Daten kombiniert. Auch aus Kalibrationsmessungen ermittelte Positionsinformationen können hierbei eingesetzt werden.

Gemäß einem Ausführungsbeispiel der Erfindung kann das Bearbeiten des Zielbereichs ein Bilden einer Vertiefung an der Probe und das Untersuchen des Zielbereichs ein Untersuchen der Vertiefung aufweisen. Jedoch können auch andere Artefakte an der Probe erzeugt und nachfolgend untersucht werden.

Im Folgenden werden exemplarische Ausführungsbeispiele der vorliegenden Erfindung mit Verweis auf die folgenden Figuren detailliert beschrieben.

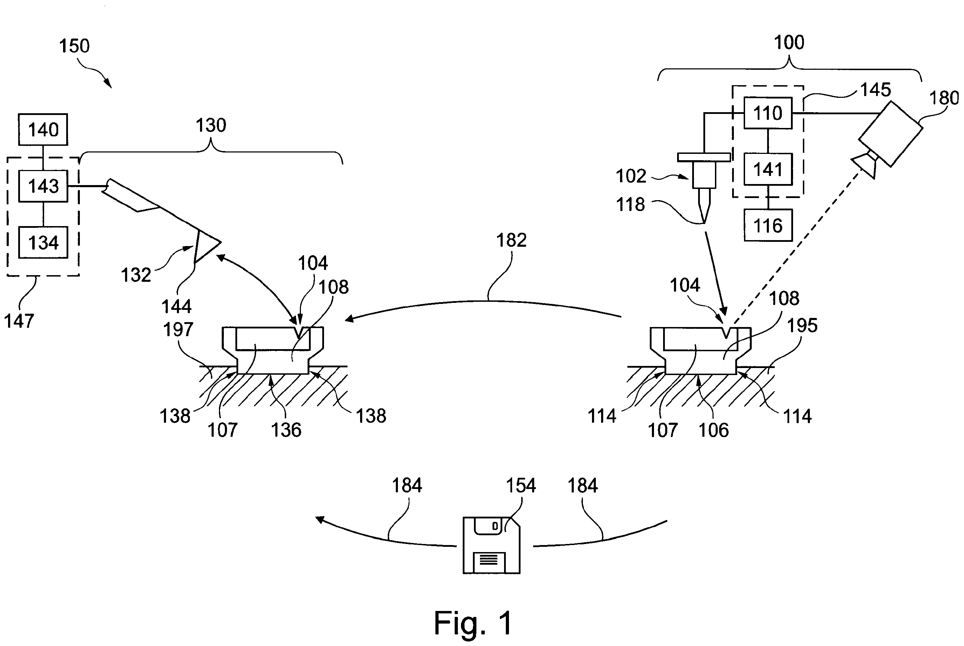

Figur 1 zeigt eine Anordnung aus einer als Ausgangspunkt fungierenden Bearbeitungs- und/oder Untersuchungsvorrichtung und einer als Zielpunkt fungierenden Bearbeitungs- und/oder Untersuchungsvorrichtung zum Bearbeiten und Untersuchen einer Probe mit selbsttätiger Wiedererkennung der Position eines Zielbereichs der Probe gemäß einem exemplarischen Ausführungsbeispiel der Erfindung.

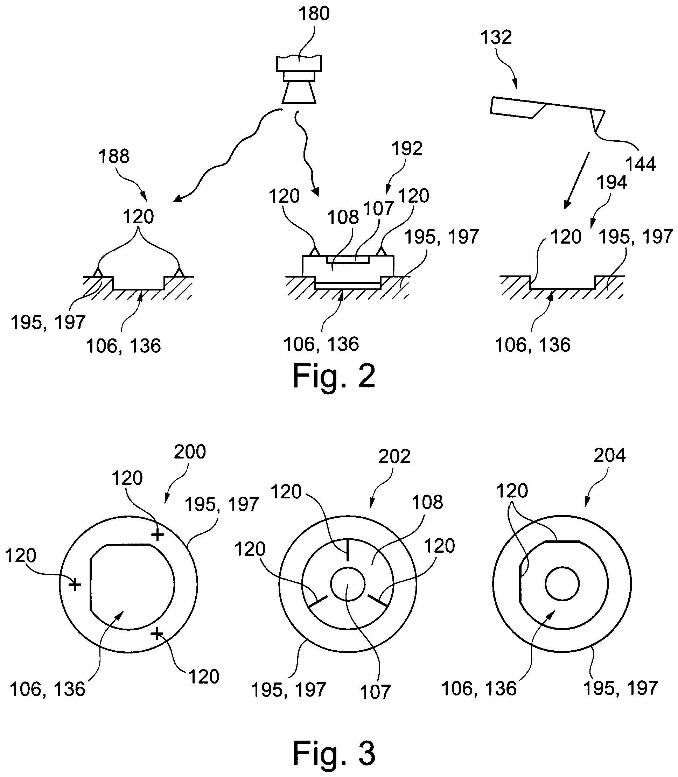

Figur 2 zeigt eine Anordnung aus einer optischen Detektionseinrichtung, einer kraftmikroskopischen Untersuchungssonde und Trägerschnittstellen bzw. einem Probenträger gemäß einem exemplarischen Ausführungsbeispiel der Erfindung.
Figur 3 zeigt Bildaufnahmen der optischen Detektionseinrichtung bzw. der kraftmikroskopischen Untersuchungssonde, wie sie mit der Konfiguration gemäß Figur 2 möglich sind.
Figur 4 zeigt eine Querschnittsansicht und eine Draufsicht eines Probenträgers, mit daran angebrachter Probe, an einer Trägerschnittstelle einer Bearbeitungs- und/oder Untersuchungsvorrichtung gemäß einem Ausführungsbeispiel der Erfindung.

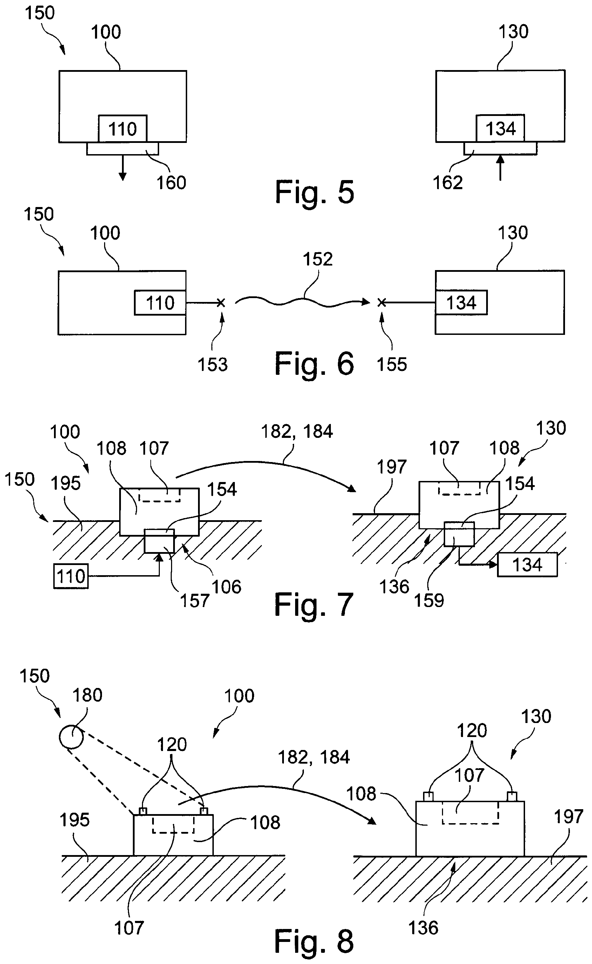

Figur 5 veranschaulicht, wie bei einer Anordnung aus einer ersten Bearbeitungs- und/oder Untersuchungsvorrichtung und einer zweiten Bearbeitungs- und/oder Untersuchungsvorrichtung gemäß einem exemplarischen Ausführungsbeispiel der Erfindung Daten über die Position eines Zielbereichs der Probe durch Benutzerschnittstellen übertragen werden können.
Figur 6 zeigt, wie bei einer Anordnung aus einer ersten Bearbeitungs- und/oder Untersuchungsvorrichtung und einer zweiten Bearbeitungs- und/oder Untersuchungsvorrichtung gemäß einem Ausführungsbeispiel der Erfindung Daten über eine Kommunikationsverbindung automatisch übertragen werden können.
Figur 7 zeigt, wie bei einer Anordnung aus einer ersten Bearbeitungs- und/oder Untersuchungsvorrichtung und einer zweiten Bearbeitungs- und/oder Untersuchungsvorrichtung gemäß einem exemplarischen Ausführungsbeispiel der Erfindung Daten über einen mobilen Datenträger, der in einem Probenträger integriert ist, selbsttätig übertragen werden können.
Figur 8 zeigt eine Anordnung aus einer ersten Bearbeitungs- und/oder Untersuchungsvorrichtung und einer zweiten Bearbeitungs- und/oder Untersuchungsvorrichtung gemäß einem anderen exemplarischen Ausführungsbeispiel der Erfindung, bei der eine Positionsbestimmung eines Zielbereichs einer Probe an der ersten Bearbeitungs- und/oder Untersuchungsvorrichtung mittels Markern und an der zweiten Bearbeitungs- und/oder Untersuchungsvorrichtung mittels einer Trägerschnittstelle als mechanische Referenz ermittelt werden.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung und der zugrundeliegenden Technologien erläutert werden:
Scratch-Tester und Indenter (die einen Eindringkörper aufweisen können) erzeugen definierte Artefakte an der Oberfläche einer bearbeiteten Probe. Solche Artefakte können so klein sein (zum Beispiel eine Größe von wenigen Mikrometern haben, insbesondere im Bereich zwischen 1 µm und 10 µm), dass sie nicht oder nur ungenau mit einer Optik eines Mikroskops beobachtet werden können, wie es häufig an einer Bearbeitungs- und/oder Untersuchungsvorrichtung verfügbar ist. Ein Bildfeld einer solchen Bearbeitungs- und/oder Untersuchungsvorrichtung kann deutlich größer sein (zum Beispiel eine Größe im Bereich von 100 µm haben, insbesondere zwischen 50 µm und 500 µm in einer jeweiligen Richtung) als die Größe eines Artefakts.

Häufig ist es wünschenswert oder notwendig, eine Probe mit dem darauf gebildeten Artefakt von einer ersten Bearbeitungs- und/oder Untersuchungsvorrichtung (zum Beispiel einem Indenter oder Scratch Tester) zu einer zweiten Bearbeitungs- und/oder Untersuchungsvorrichtung (zum Beispiel einem präziseren Bildgebungssystem, wie beispielsweise einem AFM) zu transferieren. Zum Beispiel kann eine Probe an einem ersten solchen Instrument bearbeitet und nachfolgend an einem zweiten solchen Instrument untersucht werden. Dieser Transfer soll für einen Benutzer in einfacher und fehlerrobuster Weise möglich sein. Durch einen solchen Transfer soll es einem Benutzer insbesondere ermöglicht werden, einen Zielbereich der Probe (zum Beispiel das mikroskopische Artefakt) bei der Erstellung des AFM-Bildes selbst bei Vorliegen einer großen Probe schnell wiederzufinden.

Herkömmlich können Markierungen an beiden Bearbeitungs- und/oder Untersuchungsvorrichtungen optisch detektiert werden, um auf Basis solcher Informationen Koordinaten eines Artefakts oder dergleichen zu bestimmen. Dies ist allerdings mit einem hohen Zeitaufwand verbunden und kann unter ungünstigen Umständen auch ganz scheitern, zum Beispiel wenn Markierungen beschädigt und/oder abgedeckt sind.

Um dieses Problem zu lösen, stellen exemplarische Ausführungsbeispiele der Erfindung eine intelligente Schnittstellen- und Datenübertragungsprozedur bereit, die das Übermitteln von Daten zum räumlichen Charakterisieren eines Zielbereichs (auch als Point of Interest bezeichnet) einer Probe von einem Instrument zu einem anderen Instrument und das Wiederfinden des Zielbereichs auf dem anderen Instrument auch ohne das Vorsehen von Markern an beiden Instrumenten ermöglicht.

Ein exemplarisches Ausführungsbeispiel der Erfindung basiert auf der Schaffung einer eine Probenträgerposition angebenden festen mechanischen Referenz und der Durchführung von unabhängigen (und vorzugsweise einmaligen) Kalibrierungen an jedem Instrument, d.h. an einer als Ausgangspunkt fungierenden Bearbeitungs- und/oder Untersuchungsvorrichtung und einer als Zielpunkt fungierenden Bearbeitungs- und/oder Untersuchungsvorrichtung. Dies erlaubt einen schnellen und ausreichend genauen Transfer der Probe mit rascher Wiedererkennbarkeit eines Zielbereichs derselben, was die Bearbeitung und Untersuchung der Probe für einen Benutzer stark vereinfacht und Fehlerquellen hierbei unterdrückt bzw. sogar eliminiert.

Ein aufwändiges und zeitintensives optisches Scannen von Markern oder dergleichen an beiden Bearbeitungs- und/oder Untersuchungsvorrichtungen zum Wiederauffinden eines Zielbereichs einer Probe ist dadurch entbehrlich. Die Notwendigkeit, eine hohe Anzahl von Markern im Instrument sichtbar zu machen (um zu verhindern, dass zu viele Marker unsichtbar oder versteckt, verschmutzt, verschlissen, etc. sind und somit die Indexierung nicht funktioniert), kann dadurch mit Vorteil überwunden werden. Wenn herkömmlich auf Instrumenten mit unterschiedlichen Sichtfeldern Proben gehandhabt werden, hat sich die Position der Markierungen am kleinsten Sichtfeld zu orientieren, wodurch das Bildfeld verkleinert wird und somit die maximale Größe einer zu handhabenden Probe verringert wird.

Gemäß einem Ausführungsbeispiel der Erfindung kann ein Probenaufnahmesystem an der jeweiligen Bearbeitungs- und/oder Untersuchungsvorrichtung zweiteilig vorgesehen sein, nämlich gebildet aus Probenträger und Trägerschnittstelle.

Der Probenträger kann als abnehmbarer Körper bzw. Transfertisch ausgebildet sein, der die Probe beinhalten kann, aber unabhängig vom Instrument ist. Ein solcher Probenträger kann gemäß einem Ausführungsbeispiel der Erfindung dazu verwendet werden, um eine Probe zwischen den Instrumenten zu transferieren bzw. zu überführen.

Die Trägerschnittstelle bzw. Probentischschnittstelle zum abnehmbaren Aufnehmen des Probenträgers ist fest am jeweiligen Instrument befestigt. Diese Trägerschnittstelle, die auch als Probenträgeraufnahme bezeichnet werden kann, liefert als zusätzliche Funktion eine präzise mechanische Referenz und kann somit zum Wiederauffinden eines Zielbereichs der Probe an einem Instrument beitragen, zu dessen Trägerschnittstelle der Probenträger verbracht worden ist.

Auf jedem Instrument kann die Position eines Koordinatenrahmens oder dergleichen basierend auf diesen mechanischen Referenzen (auch Schnittstellenkoordinatenrahmen genannt) sowie deren relative Position zu allen anderen Koordinatenrahmen am Instrument (zum Beispiel Eindringkörper, Kamera, Sonden, etc.) bekannt sein. Wenn auf einer ersten Bearbeitungs- und/oder Untersuchungsvorrichtung eine oder mehrere Artefaktpositionen definiert wird oder werden, kann dies in Bezug auf den Schnittstellenkoordinatenrahmen bzw. die dortige Trägerschnittstelle erfolgen. In einem nächsten Schritt kann der Probenträger bzw. Transfertisch zu einer zweiten Bearbeitungs- und/oder Untersuchungsvorrichtung bewegt und dort entsprechend den Referenzflächen an einer dortigen Trägerschnittstelle positioniert werden. Ferner können die Koordinaten der Artefaktposition(en) (oder allgemeiner mindestens eines Zielbereichs des Probenträgers) von einer Bearbeitungs- und/oder Untersuchungsvorrichtung zu der anderen Bearbeitungs- und/oder Untersuchungsvorrichtung übertragen werden. Diese Koordinaten können dann an der anderen Bearbeitungs- und/oder Untersuchungsvorrichtung verwendet werden, um den Zielbereich bzw. die Artefaktposition(en) an dem zweiten Instrument zu finden. Mit anderen Worten können, da die Beziehungen zwischen allen Koordinatenrahmen (einschließlich Kamera, AFM, Indenter, etc.) einerseits und der jeweiligen Trägerschnittstelle andererseits in jeder Bearbeitungs- und/oder Untersuchungsvorrichtung bekannt sind, die Koordinaten des Zielbereichs des Probenträgers bzw. der Probe in Bezug auf die Trägerschnittstelle formuliert werden. Der Ort eines Zielbereichs kann daher, insbesondere ohne Mitwirkung eines Benutzers, in allen Koordinatensystemen jeder Bearbeitungs- und/oder Untersuchungsvorrichtung erkannt werden. Dies ist insbesondere dann möglich, wenn die Beziehung zwischen den beteiligten Komponenten kalibriert ist, so dass sie in jeder Bearbeitungs- und/oder Untersuchungsvorrichtung gleich ist. Zusätzlich kann die relative Position zwischen Zielbereich/Artefakt und Referenzfläche auf dem Transfertisch unverändert bleiben. Folglich kann davon ausgegangen werden, dass die Koordinaten eines Zielbereichs in der Trägerschnittstelle in jeder der Bearbeitungs- und/oder Untersuchungsvorrichtungen gleich sind. Die tatsächlichen Fertigungsgenauigkeiten der Referenzflächen sowohl an der Probentischschnittstelle/Trägerschnittstelle als auch an dem Transfertisch/Probenträger haben keine Auswirkungen, solange die Kalibrierung/Justage an jeder Bearbeitungs- und/oder Untersuchungsvorrichtung diese Unvollkommenheiten berücksichtigt. Dies bedeutet im Ergebnis, dass für die Bearbeitungs- und/oder Untersuchungsvorrichtungen absolute Präzision erzielt wird, und von den verwendeten Komponenten nur Reproduzierbarkeit gefordert wird.

Um die relative Position der Trägerschnittstelle (basierend auf den Bezugsflächen auf der Probentischschnittstelle) in Bezug auf alle anderen Koordinatenrahmen in einer Bearbeitungs- und/oder Untersuchungsvorrichtung anzugeben, kann die Kalibrierung entsprechend durchgeführt werden. Dies kann zum Beispiel durch die Verwendung von Markern direkt an der Trägerschnittstelle erfolgen, indem Markierungen auf einem Kalibrierungsziel gelesen werden, das dem Transfertisch bzw. Probenträger entspricht, oder durch direktes Erfassen der Referenzflächen.

Mit Vorteil sind die einzigen Fehlerquellen in dieser Kette die relativen Positionen der Koordinatenrahmen an jeder Bearbeitungs- und/oder Untersuchungsvorrichtung und eine begrenzte Reproduzierbarkeit beim Positionieren des Probenträgers bzw. Transfertisches an der Trägerschnittstelle bzw. Probentischschnittstelle. Selbst bei Berücksichtigung von Unvollkommenheiten kann der Positionsfehler klein genug gehalten werden, um sicherzustellen, dass sich der Zielbereich bzw. das Artefakt innerhalb eines maximalen Sichtfelds der zweiten Bearbeitungs- und/oder Untersuchungsvorrichtung befindet.

Um eine genaue mechanische Referenzierung des Probenträgers bzw. Transfertischs an der Trägerschnittstelle bzw. Probentischschnittstelle zu erreichen, sollte die Position im Wesentlichen spielfrei sein und sollte eine Überbestimmung vermieden sein. Mit Vorteil kann gemäß einem exemplarischen Ausführungsbeispiel der Erfindung eine Kombination aus mehreren Referenzflächen an beiden Seiten und einem elastischen Kupplungselement (beispielsweise eine mechanische Feder, einander anziehende oder abstoßende Magnete, etc.) gebildet werden, das sicherstellt, dass die Bezugsflächen immer in vorbestimmter Weise in Kontakt bleiben.

Die Übertragung der Koordinaten des Zielbereichs an der Probe (zum Beispiel von Artefaktkoordinaten) kann zum Beispiel durch eine manuelle Benutzereingabe erfolgen, über eine drahtgebundene oder drahtlose Datenverbindung oder mithilfe eines mobilen Datenspeichergeräts. In einer bevorzugten Implementierung kann der mobile Datenspeicher in den Transfertisch bzw. den Probenträger integriert sein.

Gemäß einem anderen Ausführungsbeispiel der Anordnung kann eine der beiden Bearbeitungs- und/oder Untersuchungsvorrichtungen einen oder mehrere Marker auf der Oberseite verwenden, während eine andere der beiden Bearbeitungs- und/oder Untersuchungsvorrichtungen mit einer mechanischen Referenz in Form der Trägerschnittstelle ausgestattet ist. Um dies zu erreichen, kann zum Beispiel ein Transfertisch bzw. Probenträger sowohl Marker als auch eine mechanische Bezugsfläche bereitstellen. Ferner ist es dann vorteilhaft, eine Korrelation zwischen dem Marker-Basiskoordinatensystem und dem mechanischen Schnittstellen-Basiskoordinatenrahmen herzustellen.

**Figur 1** zeigt eine Anordnung 150 aus einer ersten Bearbeitungs- und/oder Untersuchungsvorrichtung 100 und einer zweiten Bearbeitungs- und/oder Untersuchungsvorrichtung 130 zum Bearbeiten und Untersuchen einer Probe 107 mit selbsttätiger Wiedererkennung der Position eines Zielbereichs 104 der Probe 107 gemäß einem exemplarischen Ausführungsbeispiel der Erfindung.

Die Anordnung 150 zum Handhaben einer Probe 107 weist ferner einen für beide Bearbeitungs- und/oder Untersuchungsvorrichtungen 100, 130 verwendbaren gemeinsamen und zwischen den Vorrichtungen 100, 130 transferierbaren bzw. mobilen Probenträger 108 zum Tragen der Probe 107 auf. In Figur 1 ist der Probenträger 108 zur Veranschaulichung in beiden Bearbeitungs- und/oder Untersuchungsvorrichtungen 100, 130 dargestellt. Somit kann der mobile Probenträger 108 wahlweise an einer Trägerschnittstelle 106 der ersten Bearbeitungs- und/oder Untersuchungsvorrichtung 100 oder an einer in gleicher Weise geformten und dimensionierten Trägerschnittstelle 136 der zweiten Bearbeitungs- und/oder Untersuchungsvorrichtung 130 angebracht werden. Die Trägerschnittstellen 106, 136 sind an beiden Bearbeitungs- und/oder Untersuchungsvorrichtungen 100, 130 als Vertiefungen in einem jeweiligen Basiskörper 195 bzw. 197 zum Bilden eines jeweiligen Aufnahmehohlraums mit einer zu einem Bodenbereich des Probenträgers 108 inversen Form ausgebildet. Dadurch ist ein formschlüssiges Einsetzen des Probenträgers 108 in eine jeweilige der Trägerschnittstellen 106, 136 unter Ausbildung einer reproduzierbaren und definierten sowie unveränderlichen Relativposition und Relativorientierung zwischen Probenträger 108 und den Trägerschnittstellen 106, 136 ermöglicht.

Im Weiteren wird zunächst die erste Bearbeitungs- und/oder Untersuchungsvorrichtung 100 näher beschrieben, die in dem dargestellten Ausführungsbeispiel zum Bearbeiten einer Oberfläche der Probe 107 zum Erzeugen eines Artefakts im Zielbereich 104 ausgebildet ist. Beispielsweise kann die erste Bearbeitungs- und/oder Untersuchungsvorrichtung 100 ein Nanoindenter oder ein Scratch Tester sein. Zu diesem Zweck weist die erste Bearbeitungs- und/oder Untersuchungsvorrichtung 100 eine Bearbeitungseinrichtung 102 mit einer Bearbeitungssonde 118 zum Bearbeiten des Zielbereichs 104 an der Oberfläche der Probe 107 unter Bilden einer Vertiefung oder eines Kratzers auf.

Darüber hinaus ist an der ersten Bearbeitungs- und/oder Untersuchungsvorrichtung 100 die bereits angesprochene mechanische Trägerschnittstelle 106 zum Tragen des abnehmbar an der Trägerschnittstelle 106 anbringbaren Probenträgers 108 mit der Probe 107 vorgesehen. Der Probenträger 108 kann aus der Trägerschnittstelle 106 entnommen und in eine Trägerschnittstelle 136 der zweiten Bearbeitungs- und/oder Untersuchungsvorrichtung 130 eingesetzt werden, oder umgekehrt. Der Probenträger 108 und die Trägerschnittstelle 106 sind strukturell derart aufeinander angepasst, dass der Probenträger 108 im Wesentlichen ohne Spiel an der Trägerschnittstelle 106 anbringbar ist, zum Beispiel in einer Vertiefung der Trägerschnittstelle 106 angebracht werden kann, deren Umriss im Wesentlichen dem Umriss des Probenträgers 108 entspricht. Somit kann die Trägerschnittstelle 106 ausgebildet sein, eine Position und Orientierung des daran angebrachten Probenträgers 108 formschlüssig festzulegen. Unter Verwendung von einem oder mehreren in Figur 1 schematisch angedeuteten elastischen Kopplungselementen 114 kann die Positionsgenauigkeit des Probenträgers an der Trägerschnittstelle 106 weiter verfeinert werden. Zum Beispiel können die elastischen Kopplungselemente 114 den Probenträger 108 in der Trägerschnittstelle 106 unter Aufbringung einer Vorspannkraft in eine gewünschte Soll-Position drängen und dort belassen.

Ferner weist die erste Bearbeitungs- und/oder Untersuchungsvorrichtung 100 eine Datenquelle 110 zum Bereitstellen von Daten an die zweite Bearbeitungs- und/oder Untersuchungsvorrichtung 130 auf, wobei die besagten Daten für eine Position des Zielbereichs 104 an der Oberfläche der Probe 107 in Bezug auf die feste Position der Trägerschnittstelle 106 indikativ sind. Zum Beispiel können diese Daten Koordinaten des Zielbereichs 104 enthalten, die auf ein durch die Trägerschnittstelle 106 als feste mechanische Referenz definiertes Koordinatensystem bezogen sein können. Eine Datenermittlungseinrichtung 141 der ersten Bearbeitungs- und/oder Untersuchungsvorrichtung 100 ist zum Ermitteln der für die Position des Zielbereichs 104 indikativen Daten basierend auf vorbekannter Information hinsichtlich der Position der Trägerschnittstelle 106 und basierend auf einer Position der Bearbeitungseinrichtung 102 beim Bearbeiten des Zielbereichs 104 eingerichtet.

Darüber hinaus kann die erste Bearbeitungs- und/oder Untersuchungsvorrichtung 100 eine Kalibrationseinrichtung 116 zum Kalibrieren von Positionen zwischen der Bearbeitungssonde 118 der Bearbeitungseinrichtung 102 und der Trägerschnittstelle 106 aufweisen. Die Kalibrationseinrichtung 116 kann zum Beispiel zum Kalibrieren basierend auf dem Erfassen von Markierungen (nicht gezeigt) an der ersten Bearbeitungs- und/oder Untersuchungsvorrichtung 100 eingerichtet sein. Unter anderem zum Erfassen der Marker zum Kalibrieren kann die erste Bearbeitungs- und/oder Untersuchungsvorrichtung 100 eine optische Detektionseinrichtung 180 (zum Beispiel eine Kamera) aufweisen.

Beispielsweise können die Datenermittlungseinrichtung 141und die Datenquelle 110 Teil einer Steuereinrichtung 145 zum Steuern der ersten Bearbeitungs- und/oder Untersuchungsvorrichtung 100 sein.

Die im Weiteren näher beschriebene zweite Bearbeitungs- und/oder Untersuchungsvorrichtung 130 kann zum Untersuchen der mittels der ersten Bearbeitungs- und/oder Untersuchungsvorrichtung 100 bearbeiteten Oberfläche der Probe 107 ausgebildet sein. Insbesondere kann die zweite Bearbeitungs- und/oder Untersuchungsvorrichtung 130 ein Rasterkraftmikroskop sein. Die zweite Bearbeitungs- und/oder Untersuchungsvorrichtung 130 weist hierfür eine Untersuchungseinrichtung 132 mit einer Untersuchungssonde 144 zum Untersuchen des bearbeiteten Zielbereichs 104 an der Oberfläche der Probe 107 auf. Die mechanische Trägerschnittstelle 136 der zweiten Bearbeitungs- und/oder Untersuchungsvorrichtung 130 dient zum Tragen des abnehmbar an der Trägerschnittstelle 136 anbringbaren Probenträgers 108 mit der Probe 107, nachdem die Probe 107 an der ersten Bearbeitungs- und/oder Untersuchungsvorrichtung 100 bearbeitet und an die zweite Bearbeitungs- und/oder Untersuchungsvorrichtung 130 überführt worden ist. Dieses Überführen ist mit Bezugszeichen 182 schematisiert.

Der auch von der zweiten Bearbeitungs- und/oder Untersuchungsvorrichtung 130 verwendete Probenträger 108 und die Trägerschnittstelle 136 sind ebenfalls derart aufeinander angepasst, dass der Probenträger 108 im Wesentlichen spielfrei und somit mit hoher räumlicher Präzision an einer definierten Stelle an der Trägerschnittstelle 136 anbringbar ist. Der Probenträger 108 und die Trägerschnittstelle 136 sind also strukturell derart aufeinander angepasst, dass der Probenträger 108 im Wesentlichen ohne Spiel an der Trägerschnittstelle 136 anbringbar ist, zum Beispiel in einer Vertiefung der Trägerschnittstelle 136 angebracht werden kann, deren Umriss im Wesentlichen dem Umriss des Probenträgers 108 entspricht. Der Umriss der beiden Trägerschnittstellen 106, 136 kann mit Vorteil identisch sein. Folglich ermöglicht es auch die Trägerschnittstelle 136, eine Position und Orientierung des daran angebrachten Probenträgers 108 in formschlüssiger Weise festzulegen. Hierfür können wiederum elastische Kopplungselemente 138 verwendet werden, die wie die elastischen Kopplungselemente 114 wirken und entsprechend ausgebildet sein können.

Eine Datenempfangseinrichtung 134 der zweiten Bearbeitungs- und/oder Untersuchungsvorrichtung 130 dient zum Empfangen von Daten von der Datenquelle 110 der ersten Bearbeitungs- und/oder Untersuchungsvorrichtung 100, die für eine Position des Zielbereichs 104 indikativ sind. Zu diesem Zweck kann ein mobiler Datenträger 154 (zum Beispiel eine Diskette) von der Datenquelle 110 mit den Daten bespielt werden und der mobile Datenträger 154 dann, wie mit Bezugszeichen 184 angedeutet ist, zum Bereitstellen dieser Daten an die Datenempfangseinrichtung 134 verbracht werden.

Die zweite Bearbeitungs- und/oder Untersuchungsvorrichtung 130 weist ferner eine Datenermittlungseinrichtung 143 auf, die zum Ermitteln einer für die Position des Zielbereichs 104 des Probenträgers 108 an der Trägerschnittstelle 136 indikativen Daten bezogen auf ein Koordinatensystem der Trägerschnittstelle 136 eingerichtet ist. Diese Ermittlung kann basierend auf vorbekannter Information hinsichtlich der Position der Trägerschnittstelle 136 und basierend auf den von der Datenquelle 110 der ersten Bearbeitungs- und/oder Untersuchungsvorrichtung 100 empfangenen Daten erfolgen. Ferner kann bei dieser Ermittlung Kalibrationsinformation verwendet werden.

Eine Kalibrationseinrichtung 140 der zweiten Bearbeitungs- und/oder Untersuchungsvorrichtung 130 fungiert zum Kalibrieren von Positionen zwischen der Untersuchungssonde 144 der Untersuchungseinrichtung 132 und der Trägerschnittstelle 136 sowie zwischen der ersten Bearbeitungs- und/oder Untersuchungsvorrichtung 100 und der zweiten Bearbeitungs- und/oder Untersuchungsvorrichtung 130. Dies erfolgt mit Vorteil basierend auf dem Erfassen von Markierungen (nicht dargestellt) an der Bearbeitungs- und/oder Untersuchungsvorrichtung 130.

Beispielsweise können die Datenermittlungseinrichtung 143 und die Datenempfangseinrichtung 134 Teil einer Steuereinrichtung 147 zum Steuern der zweiten Bearbeitungs- und/oder Untersuchungsvorrichtung 130 sein.

Die Datenquelle 110 der ersten Bearbeitungs- und/oder Untersuchungsvorrichtung 100 und die Datenempfangseinrichtung 134 der zweiten Bearbeitungs- und/oder Untersuchungsvorrichtung 130 sind derart aufeinander angepasst (zum Beispiel sind zum Bereitstellen bzw. Verarbeiten von Daten entsprechend einem aufeinander abgestimmten Format bzw. Standard ausgebildet), dass die für eine Position des Zielbereichs 104 indikativen Daten von der Datenquelle 110 an die Datenempfangseinrichtung 134 übermittelt werden können. Wie in Figur 1 dargestellt, sind die Datenquelle 110 und die Datenempfangseinrichtung 134 ausgebildet, über den von einem Benutzer handhabbaren mobilen Datenspeicher 154 (im dargestellten Beispiel eine Diskette) die Daten von der Datenquelle 110 an die Datenempfangseinrichtung 134 zu übertragen.

Mit der beschriebenen Anordnung 150 kann ein Bearbeiten und Untersuchen einer Oberfläche der Probe 107 an dem Probenträger 108 schnell einfach und mit geringem Aufwand durchgeführt werden, da der Probenträger 108 zwischen den Trägerschnittstellen 106, 136 einfach transferiert werden kann. Ferner kann ein Wiederauffinden eines Artefakts in dem Zielbereich 104, das durch die Bearbeitungseinrichtung 102 an der Probe 107 erzeugt worden ist, an der Untersuchungseinrichtung 132 in einfacher und fehlerrobuster Weise erfolgen. Bei einem solchen Verfahren wird also zunächst der Zielbereich 104 an der Oberfläche der Probe 107 mittels der Bearbeitungseinrichtung 102 der ersten Bearbeitungs- und/oder Untersuchungsvorrichtung 100 bearbeitet. Währenddessen ist der Probenträger 108 mit der Probe 107 an der Trägerschnittstelle 106 der ersten Bearbeitungs- und/oder Untersuchungsvorrichtung 100 angebracht. Bei diesem Bearbeiten des Zielbereichs 104 kann zum Beispiel ein Artefakt in Form einer Vertiefung an der Probe 107 erzeugt werden. Nachfolgend kann von einem Benutzer der Probenträger 108 von der ersten Bearbeitungs- und/oder Untersuchungsvorrichtung 100 zu der Trägerschnittstelle 136 der zweiten Bearbeitungs- und/oder Untersuchungsvorrichtung 130 zum Untersuchen des Zielbereichs 104 verbracht werden. Hierfür kann der Probenträger 108 einfach aus der Trägerschnittstelle 106 entnommen und in die Trägerschnittstelle 136 eingesetzt werden. Dann können Koordinaten des Zielbereichs 104 im Koordinatensystem der Trägerschnittstelle 106 der ersten Bearbeitungs- und/oder Untersuchungsvorrichtung 100 von der Datenquelle 110 der ersten Bearbeitungs- und/oder Untersuchungsvorrichtung 100 an die Datenempfangseinrichtung 134 der zweiten Bearbeitungs- und/oder Untersuchungsvorrichtung 130 übertragen werden. Während des Untersuchens wird der Probenträger 108 an der mechanischen Trägerschnittstelle 136 der zweiten Bearbeitungs- und/oder Untersuchungsvorrichtung 130 angebracht. Daher kann das Untersuchen des Zielbereichs 104 ein Untersuchen des Artefakts in Form der Vertiefung aufweisen. Ein Wiederauffinden des Zielbereichs 104 an der zweiten Bearbeitungs- und/oder Untersuchungsvorrichtung 130 gelingt unter Verwendung der übermittelten Daten und unter Verwendung der in der zweiten Bearbeitungs- und/oder Untersuchungsvorrichtung 130 fest gespeicherten Position der Trägerschnittstelle 136. Hierfür können die aus einer Kalibrierung bekannten Positionsrelationen zwischen den einzelnen Komponenten der ersten Bearbeitungs- und/oder Untersuchungsvorrichtung 100 (insbesondere zwischen der Bearbeitungssonde 118 und der Trägerschnittstelle 106), zwischen den einzelnen Komponenten der zweiten Bearbeitungs- und/oder Untersuchungsvorrichtung 130 (insbesondere zwischen der Untersuchungssonde 144 und der Trägerschnittstelle 136) und zwischen der ersten Bearbeitungs- und/oder Untersuchungsvorrichtung 100 und der zweiten Bearbeitungs- und/oder Untersuchungsvorrichtung 130 (die zwischen den Instrumenten ausgetauscht werden können) zum Einsatz kommen.

Obgleich dies in Figur 1 nicht dargestellt ist, kann auch die erste Bearbeitungs- und/oder Untersuchungsvorrichtung 100 eine Datenempfangseinrichtung aufweisen, deren Funktionalität jener der Datenempfangseinrichtung 134 entsprechen kann. In entsprechender Weise kann auch die zweite Bearbeitungs- und/oder Untersuchungsvorrichtung 130 eine Datenquelle aufweisen, deren Funktionalität jener der Datenquelle 110 entsprechen kann.

**Figur 2** zeigt eine Anordnung aus einer optischen Detektionseinrichtung 180 oder einer Untersuchungseinrichtung 132 mit Untersuchungssonde 144 einerseits und Trägerschnittstellen 106, 136 bzw. einem Probenträger 108 mit Markern 120 gemäß einem exemplarischen Ausführungsbeispiel der Erfindung. Figur 2 stellt verschiedene Möglichkeiten der beschriebenen Kalibrierungen dar und zeigt insbesondere die hierfür verwendbare optische Detektionseinrichtung 180 (zum Beispiel eine CCD-Kamera oder eine CMOS-Kamera) sowie die kraftmikroskopische Untersuchungssonde 144.

Wie in Figur 2 mit Bezugszeichen 188 dargestellt ist, können Marker 120 zum Kalibrieren an einem Basiskörper 195, 197 der jeweiligen Bearbeitungs- und/oder Untersuchungsvorrichtung 100, 130 angeordnet sein und von der optischen Detektionseinrichtung 180 optisch erfasst werden. Mit Vorteil können diese Marker 120 im Bereich der jeweiligen Trägerschnittstelle 106 bzw. 136 angeordnet sein.

Wie in Figur 2 mit Bezugszeichen 192 dargestellt ist, kann oder können alternativ oder ergänzend bei der Kalibrierung auch ein oder mehrere optische Marker 120 zum Einsatz kommen, die an dem Probenträger 108 angebracht sind, wobei die relative Lage und Orientierung der Marker 120 in Bezug auf die Trägerschnittstelle 106, 136 bekannt oder ermittelbar sind.

Wie in Figur 2 mit Bezugszeichen 194 dargestellt, kann alternativ oder ergänzend zum Vorsehen optisch erfassbarer Marker 120 auch beispielsweise ein Umriss bzw. eine Grenzkante der Trägerschnittstelle 106, 136 (hier ausgebildet als Vertiefung in dem Basiskörper 195, 197) für die Zwecke der Kalibration verwendet werden. Beispielsweise kann die Kalibration unter Verwendung eines solchen oder eines anderen haptischen Markers 120 mittels einer kraftmikroskopischen Untersuchungssonde 144 durchgeführt werden.

**Figur 3** zeigt Bildaufnahmen der Konfigurationen gemäß Figur 2, die mit der optischen Detektionseinrichtung 180 bzw. mit der kraftmikroskopischen Untersuchungssonde 144 aufgenommen werden können. Figur 3 zeigt mit Bezugszeichen 200, 202 Bilder, welche die optische Detektionseinrichtung 180 für die in Figur 2 mit Bezugszeichen 188, 192 dargestellten Szenarien aufnimmt. Figur 3 zeigt mit Bezugszeichen 204 schematisch ein Bild, das die Untersuchungssonde 144 für das in Figur 2 mit Bezugszeichen 194 dargestellte Szenario aufnehmen kann.

**Figur 4** zeigt eine Querschnittsansicht und eine Draufsicht eines Probenträgers 108 (mit daran angebrachter Probe 107) an einer Trägerschnittstelle 106 gemäß einem Ausführungsbeispiel der Erfindung.

Wie in Figur 4 dargestellt ist, kann der Probenträger 108 mittels eines (hier mittels einer mechanischen Feder ausgebildeten) Vorspannelements 114 (zum Beispiel rechtsseitig und unterseitig) an die Trägerschnittstelle 106 angedrückt werden, wenn der Probenträger 108 in der Trägerschnittstelle 106 aufgenommen ist. Durch dieses definierte Andrücken ist eine präzise Relativpositionierung zwischen Probenträger 108 und Trägerschnittstelle 106 erreichbar.

Eine Referenzfläche des Probenträgers 108 in z-Richtung ist mit Bezugszeichen 300 dargestellt. Eine Referenzfläche der Trägerschnittstelle 106 in z-Richtung ist mit Bezugszeichen 302 dargestellt. Eine Referenzfläche des Probenträgers 108 in einer x-y-Ebene ist mit Bezugszeichen 306 dargestellt. Eine Referenzfläche der Trägerschnittstelle 106 in x-Richtung ist mit Bezugszeichen 308 dargestellt. Eine Referenzfläche der Trägerschnittstelle 106 in y-Richtung ist mit Bezugszeichen 304 dargestellt.

Trägerschnittstellen 106, 136 der ersten Bearbeitungs- und/oder Untersuchungsvorrichtung 100 und der zweiten Bearbeitungs- und/oder Untersuchungsvorrichtung 130 können identisch in Bezug auf die Referenzflächen 300, 302, 304, 306, 308 ausgebildet sein.

**Figur 5** veranschaulicht, wie bei einer Anordnung 150 aus einer ersten Bearbeitungs- und/oder Untersuchungsvorrichtung 100 und einer zweiten Bearbeitungs- und/oder Untersuchungsvorrichtung 130 gemäß einem exemplarischen Ausführungsbeispiel der Erfindung Daten über die Position eines Zielbereichs 104 der Probe 107 durch Benutzerschnittstellen 160, 162 übertragen werden können. In dem dargestellten Ausführungsbeispiel können die Daten durch einen Benutzer von einer Benutzerschnittstelle 160 der ersten Bearbeitungs- und/oder Untersuchungsvorrichtung 100 an eine Benutzerschnittstelle 162 der zweiten Bearbeitungs- und/oder Untersuchungsvorrichtung 130 übertragen werden. Gemäß Figur 5 kann ein Benutzer händisch die für die Position des Zielbereichs 104 am Probenträger 108 indikativen Daten von der ersten Bearbeitungs- und/oder Untersuchungsvorrichtung 100 an die zweite Bearbeitungs- und/oder Untersuchungsvorrichtung 130 übertragen. Zu diesem Zweck kann einem Benutzer über Benutzerschnittstelle 160 die Daten über die Position des Zielbereichs 104 ablesen. Die Benutzerschnittstelle 160 kann zum Beispiel eine elektronische Anzeigevorrichtung sein. Ein Benutzer kann die ihm so zur Kenntnis gebrachten Positionsdaten über den Zielbereich 104 dann über Benutzerschnittstelle 162 eingeben, zum Beispiel über eine elektronische Eingabeeinrichtung (wie zum Beispiel ein Touchscreen oder eine Tastatur).

**Figur 6** zeigt, wie bei einer Anordnung 150 aus einer ersten Bearbeitungs- und/oder Untersuchungsvorrichtung 100 und einer zweiten Bearbeitungs- und/oder Untersuchungsvorrichtung 130 gemäß einem Ausführungsbeispiel der Erfindung Daten über eine Kommunikationsverbindung 152 automatisch übertragen werden können. Gemäß Figur 6 sind die Datenquelle 110 und die Datenempfangseinrichtung 134 ausgebildet, über die drahtlose Kommunikationsverbindung 152 die Daten von der Datenquelle 110 an die Datenempfangseinrichtung 134 zu übertragen. Hierfür können zum Beispiel die Daten über zwei kommunizierfähig gekoppelte Antennen 153, 155 mittels eines zuvor vereinbarten und von beiden Antennen 153, 155 unterstützten Kommunikationsprotokolls übermittelt werden, zum Beispiel über ein Mobilfunknetzwerk, ein Intranet oder das öffentliche Internet. Auch ein proprietärer Kommunikationsstandard kann hierfür verwendet werden. Ein Benutzer muss keinerlei Beitrag leisten, um die Daten zu transferieren.

**Figur 7** zeigt, wie bei einer Anordnung 150 aus einer ersten Bearbeitungs- und/oder Untersuchungsvorrichtung 100 und einer zweiten Bearbeitungs- und/oder Untersuchungsvorrichtung 130 gemäß einem exemplarischen Ausführungsbeispiel der Erfindung Daten über einen mobilen Datenträger 154, der hier in dem Probenträger 108 integriert ist, selbsttätig übertragen werden können. Gemäß Figur 6 ist der mobile Datenspeicher 154 also in den Probenträger 108 integriert, d.h. bildet ein Teil des Probenträgers 108. Zum Beispiel kann der mobile Datenspeicher 154 ein RFID-Tag sein. Genauer gesagt ist der mobile Datenspeicher 154 derart in den Probenträger 108 integriert, dass bei Anordnen des Probenträgers 108 an der Trägerschnittstelle 106 der ersten Bearbeitungs- und/oder Untersuchungsvorrichtung 100 die Daten von der Datenquelle 110 auf den mobilen Datenspeicher 154 des Probenträgers 108 übertragen werden. Ferner können bei Anordnen des Probenträgers 108 an der Trägerschnittstelle 136 der zweiten Bearbeitungs- und/oder Untersuchungsvorrichtung 130 die Daten von dem mobilen Datenspeicher 154 des Probenträgers 108 an die Datenempfangseinrichtung 134 übertragen werden. Bezugnehmend auf den linken Abschnitt gemäß Figur 7 können bei Einführen des Probenträgers 108 in die Trägerschnittstelle 106 der ersten Bearbeitungs- und/oder Untersuchungsvorrichtung 100 nach Ermittlung der Position des Zielbereichs 104 die entsprechenden Daten selbsttätig in dem mobilen Datenträger 154 des Probenträgers 108 gespeichert werden. Die Datenübertragung kann drahtlos von einem Daten-Schreibgerät 157 auf den als RFID-Tag ausgebildeten mobilen Datenspeicher 154 erfolgen. Ein zum Daten-Schreiben erforderlicher Schreibabstand wird dann unterschritten und ein Schreiben der Daten wird dann ermöglicht, wenn der Probenträger 108 in die Trägerschnittstelle 106 eingesetzt wird. Durch formschlüssiges Einsetzen des Probenträgers 108 in die hier als Vertiefung ausgebildete Trägerschnittstelle 106 kann somit die Übermittlung der Daten von der Datenquelle 110 über das Daten-Schreibgerät 157 auf den mobilen Datenträger 154 drahtlos durchgeführt werden. Wie mit Bezugszeichen 182, 184 dargestellt, kann anschließend der Probenträger 108, zum Beispiel zum Durchführen einer Untersuchung, in die ebenfalls als Vertiefung ausgebildete Trägerschnittstelle 136 der zweiten Bearbeitungs- und/oder Untersuchungsvorrichtung 130 eingeführt werden. Das Einsetzen des Probenträgers 108 in die Trägerschnittstelle 136 der zweiten Bearbeitungs- und/oder Untersuchungsvorrichtung 130 bringt dann den mobilen Datenträger 154 in einen Leseabstand eines Daten-Lesegeräts 159. Dies löst bei der dargestellten Ausführungsform die Übertragung der Daten von dem mobilen Datenträger 154 auf das Daten-Lesegerät 159 und folglich auf die Datenempfangseinrichtung 134 der zweiten Bearbeitungs- und/oder Untersuchungsvorrichtung 130 aus.

**Figur 8** zeigt eine Anordnung 150 aus einer ersten Bearbeitungs- und/oder Untersuchungsvorrichtung 100 und einer zweiten Bearbeitungs- und/oder Untersuchungsvorrichtung 130 gemäß einem anderen exemplarischen Ausführungsbeispiel der Erfindung, bei der eine Positionsbestimmung eines Zielbereichs 104 einer Probe 107 an der ersten Bearbeitungs- und/oder Untersuchungsvorrichtung 100 mittels Markern 120 und an der zweiten Bearbeitungs- und/oder Untersuchungsvorrichtung 130 mittels einer mechanischen Trägerschnittstelle 136 ermittelt werden.

Während des Bearbeitens an der ersten Bearbeitungs- und/oder Untersuchungsvorrichtung 100 wird der Markierungen 120 aufweisende Probenträger 108 an der ersten Bearbeitungs- und/oder Untersuchungsvorrichtung 100 angebracht, die keine mechanische Trägerschnittstelle aufweist. Während des Untersuchens wird der Probenträger 108 an der mechanischen Trägerschnittstelle 136 der Bearbeitungs- und/oder Untersuchungsvorrichtung 130 angebracht.

Figur 8 zeigt ein Ausführungsbeispiel, bei dem eine Trägerschnittstelle 136 als feste mechanische Referenz nur an der zweiten Bearbeitungs- und/oder Untersuchungsvorrichtung 130, nicht hingegen an der ersten Bearbeitungs- und/oder Untersuchungsvorrichtung 100 ausgebildet ist. Um die Bestimmung der Position des Zielbereichs 104 mit dem Artefakt der Probe 107 am Probenträger 108 am Ort der ersten Bearbeitungs- und/oder Untersuchungsvorrichtung 100 zu ermöglichen, können Marker 120 direkt am Probenträger 108 mittels einer optischen Detektionseinrichtung 180 ausgelesen werden. Dadurch ist es möglich, wenngleich mit höherem Aufwand als bei dem Ausführungsbeispiel gemäß Figur 1, Daten indikativ für die Position des Zielbereichs 104 am Probenträger 108 zu ermitteln. Wie mit Bezugszeichen 182, 184 dargestellt ist, können diese Daten und kann der Probenträger 108 zu der zweiten Bearbeitungs- und/oder Untersuchungsvorrichtung 130 transferiert werden. Nach Überführung des Probenträgers 108 in die Trägerschnittstelle 136 der zweiten Bearbeitungs- und/oder Untersuchungsvorrichtung 130 kann dann in der in Figur 1 beschriebenen Art und Weise zunächst durch die zweite Bearbeitungs- und/oder Untersuchungsvorrichtung 130 auf die infolge einer zuvor durchgeführten Kalibration bekannten Position der Trägerschnittstelle 136 und daher des in diese eingesetzten Probenträgers 108 zurückgegriffen werden. Darüber hinaus kann unter Verwendung der übermittelten Daten auch die Position des Zielbereichs 104 der Probe 107 in Trägerschnittstelle 136 ermittelt werden. Hierfür ist auf Seiten der zweiten Bearbeitungs- und/oder Untersuchungsvorrichtung 130 aufgrund der Trägerschnittstelle 136 als feste mechanische Referenz keine Markerdetektion oder dergleichen erforderlich.

Es ist anzumerken, dass abweichend von Figur 8 eine Trägerschnittstelle 106 an der ersten Bearbeitungs- und/oder Untersuchungsvorrichtung 100 vorgesehen werden kann und die Trägerschnittstelle 136 an der zweiten Bearbeitungs- und/oder Untersuchungsvorrichtung 130 weggelassen werden kann. In letzterem Szenario kann auf Seiten der zweiten Bearbeitungs- und/oder Untersuchungsvorrichtung 130 ein Wiedererkennen des Zielbereichs 104 nach Durchführung einer Markerdetektion erfolgen, wie in Figur 8 für die erste Bearbeitungs- und/oder Untersuchungsvorrichtung 100 beschrieben.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Bearbeitungs- und/oder Untersuchungsvorrichtung (100, 130) zum Bearbeiten und/oder Untersuchen einer Oberfläche einer Probe (107), wobei die Bearbeitungs- und/oder Untersuchungsvorrichtung (100, 130) aufweist:
eine Bearbeitungseinrichtung (102) zum Bearbeiten eines Zielbereichs (104) und/oder eine Untersuchungseinrichtung (132) zum Untersuchen eines Zielbereichs (104) an der Oberfläche der Probe (107);
eine mechanische Trägerschnittstelle (106) als mechanische Referenz zum Tragen eines abnehmbar an der Trägerschnittstelle (106) anbringbaren Probenträgers (108) mit der Probe (107); und
eine Datenquelle (110) zum Bereitstellen von Daten an besagte Bearbeitungs- und/oder Untersuchungsvorrichtung (100, 130) oder an eine andere Bearbeitungs- und/oder Untersuchungsvorrichtung (100, 130), welche Daten für eine Position des Zielbereichs (104) bezogen auf besagte mechanische Referenz indikativ sind.

2. Bearbeitungs- und/oder Untersuchungsvorrichtung (100, 130) gemäß Anspruch 1, aufweisend eine Datenermittlungseinrichtung (141), die zum Ermitteln der für die Position des Zielbereichs (104) indikativen Daten basierend auf vorbekannter Information hinsichtlich der Position der Trägerschnittstelle (106) und basierend auf einer Position der Bearbeitungseinrichtung (102) beim Bearbeiten des Zielbereichs (104) bzw. der Untersuchungseinrichtung (132) beim Untersuchen des Zielbereichs (104) eingerichtet ist.

3. Bearbeitungs- und/oder Untersuchungsvorrichtung (100, 130) zum Bearbeiten und/oder Untersuchen einer Oberfläche einer Probe (107), wobei die Bearbeitungs- und/oder Untersuchungsvorrichtung (100, 130) aufweist:
eine Bearbeitungseinrichtung (102) zum Bearbeiten eines Zielbereichs (104) und/oder eine Untersuchungseinrichtung (132) zum Untersuchen eines Zielbereichs (104) an der Oberfläche der Probe (107);
eine mechanische Trägerschnittstelle (136) als mechanische Referenz zum Tragen eines abnehmbar an der Trägerschnittstelle (136) anbringbaren Probenträgers (108) mit der Probe (107); und
eine Datenempfangseinrichtung (134) zum Empfangen von Daten von der besagten Bearbeitungs- und/oder Untersuchungsvorrichtung (130, 100) oder von einer anderen Bearbeitungs- und/oder Untersuchungsvorrichtung (130, 100), welche Daten für eine Position des Zielbereichs (104) bezogen auf besagte mechanische Referenz indikativ sind.

4. Bearbeitungs- und/oder Untersuchungsvorrichtung (100, 130) gemäß Anspruch 3, aufweisend eine Datenermittlungseinrichtung (143), die zum Ermitteln der für die Position des Zielbereichs (104) indikativen Daten basierend auf vorbekannter Information hinsichtlich der Position der Trägerschnittstelle (136) und basierend auf den empfangenen Daten eingerichtet ist.

5. Bearbeitungs- und/oder Untersuchungsvorrichtung (100, 130) gemäß einen der Ansprüche 1 bis 4, aufweisend den Probenträger (108) zum Tragen der Probe (107), der abnehmbar, und insbesondere formschlüssig, an der Trägerschnittstelle (106, 136) anbringbar ist, wobei der Probenträger (108) insbesondere frei von optisch zu erfassenden Markierungen (120) ist, wobei insbesondere der Probenträger (108) und/oder die Trägerschnittstelle (106, 136) derart ausgebildet ist oder sind, dass der Probenträger (108) verschiebegesichert an der Trägerschnittstelle (106, 136) anbringbar ist, insbesondere mittels einer Vorspannkraft unter Verwendung von mindestens einem Vorspannelement (114).

6. Bearbeitungs- und/oder Untersuchungsvorrichtung (100, 130) gemäß einem der Ansprüche 1 bis 5, aufweisend eine Kalibrationseinrichtung (116, 140) zum Kalibrieren von Positionen zwischen der Bearbeitungseinrichtung (102) und/oder der Untersuchungseinrichtung (132) einerseits und der Trägerschnittstelle (106, 136) andererseits, wobei die Kalibrationseinrichtung (116, 140) insbesondere ausgebildet ist, der Datenermittlungseinrichtung (141, 143) für das Kalibrieren der Positionen indikative Information als Basis für das Ermitteln der Daten bereitzustellen.

7. Bearbeitungs- und/oder Untersuchungsvorrichtung (100, 130) gemäß Anspruch 6, aufweisend zumindest eines der folgenden Merkmale:
wobei die Kalibrationseinrichtung (116, 140) zum Kalibrieren basierend auf einem optischen Erfassen von Markierungen (120) an der Bearbeitungs- und/oder Untersuchungsvorrichtung (100, 130), insbesondere an deren Trägerschnittstelle (106, 136) und/oder an einem an der Trägerschnittstelle (106, 136) angebrachten Probenträger (108), eingerichtet ist;
wobei die Kalibrationseinrichtung (116, 140) zum Kalibrieren basierend auf einem Erfassen einer Oberflächentopologie an der Bearbeitungs- und/oder Untersuchungsvorrichtung (100, 130), insbesondere an deren Trägerschnittstelle (106, 136) und/oder an einem an der Trägerschnittstelle (106, 136) angebrachten Probenträger (108), eingerichtet ist.

8. Bearbeitungs- und/oder Untersuchungsvorrichtung (100, 130) gemäß einem der Ansprüche 1 bis 7, aufweisend zumindest eines der folgenden Merkmale:
wobei die Trägerschnittstelle (106, 136) ausgebildet ist, eine Position und eine Orientierung des an der Trägerschnittstelle (106, 136) angebrachten Probenträgers (108) festzulegen, insbesondere formschlüssig festzulegen;
wobei die Datenquelle (110) ausgebildet ist, die Position des Zielbereichs (104) der Probe (107) bezogen auf ein Koordinatensystem der Trägerschnittstelle (106) zu übermitteln;
ausgebildet zum Bearbeiten und/oder Untersuchen einer Oberfläche einer Mehrzahl von Proben (107), insbesondere alle angeordnet an einem gemeinsamen Probenträger (108);
ausgebildet als Indenter, insbesondere Nanoindenter, als Scratch Tester, als Halbleiterprozessiervorrichtung, als Abscheidevorrichtung, als Belichtungsvorrichtung, als Ätzvorrichtung, als Rastersondenmikroskop, insbesondere als Rasterkraftmikroskop, als optisches Mikroskop und/oder als Spektrometer, insbesondere als Raman-Spektrometer;
wobei die Trägerschnittstelle (106, 136) an einer vorbekannten Position an der Bearbeitungs- und/oder Untersuchungsvorrichtung (100, 130) angeordnet ist, welche vorbekannte Position der Trägerschnittstelle (106, 136) zum Ermitteln der für die Position des Zielbereichs (104) bezogen auf besagte mechanische Referenz indikativen Daten verwendet wird.

9. Anordnung (150) zum Handhaben einer Probe (107), aufweisend:
eine erste Bearbeitungs- und/oder Untersuchungsvorrichtung (100, 130) gemäß einem der Ansprüche 1, 2 oder 5 bis 8; und
eine zweite Bearbeitungs- und/oder Untersuchungsvorrichtung (100, 130) gemäß einem der Ansprüche 3 bis 8; und
einen Probenträger (108) zum Tragen der Probe (107), der wahlweise an der Trägerschnittstelle (106) der ersten Bearbeitungs- und/oder Untersuchungsvorrichtung (100, 130) oder an der Trägerschnittstelle (136) der zweiten Bearbeitungs- und/oder Untersuchungsvorrichtung (100, 130) anbringbar ist;
wobei die Datenquelle (110) der ersten Bearbeitungs- und/oder Untersuchungsvorrichtung (100, 130) und die Datenempfangseinrichtung (134) der zweiten Bearbeitungs- und/oder Untersuchungsvorrichtung (100, 130) derart aufeinander angepasst sind, dass die für eine Position des Zielbereichs (104) indikativen Daten von der Datenquelle (110) an die Datenempfangseinrichtung (134) übermittelbar sind.

10. Anordnung (150) gemäß Anspruch 9, aufweisend zumindest eines der folgenden Merkmale:
wobei die Trägerschnittstellen (106, 136) der ersten Bearbeitungs- und/oder Untersuchungsvorrichtung (100, 130) und der zweiten Bearbeitungs- und/oder Untersuchungsvorrichtung (100, 130) identisch, insbesondere identisch in Bezug auf Referenzflächen (300, 302, 304, 306, 308) der Trägerschnittstellen (106, 136) und/oder des Probenträgers (108), ausgebildet sind;
wobei die Datenquelle (110) und die Datenempfangseinrichtung (134) ausgebildet sind, über eine, insbesondere drahtgebundene oder drahtlose, Kommunikationsverbindung (152) die Daten von der Datenquelle (110) an die Datenempfangseinrichtung (134) zu übertragen.

11. Anordnung (150) gemäß Anspruch 9 oder 10, wobei die Datenquelle (110) und die Datenempfangseinrichtung (134) ausgebildet sind, über einen mobilen Datenspeicher (154) die Daten von der Datenquelle (110) an die Datenempfangseinrichtung (134) zu übertragen.

12. Anordnung (150) gemäß Anspruch 11, aufweisend zumindest eines der folgenden Merkmale:
wobei der mobile Datenspeicher (154) in den Probenträger (108) integriert ist, wobei insbesondere der mobile Datenspeicher (154) derart in den Probenträger (108) integriert ist, dass bei Anordnen des Probenträgers (108) an der Trägerschnittstelle (106) der die Datenquelle (110) aufweisenden Bearbeitungs- und/oder Untersuchungsvorrichtung (100, 130) die Daten von der Datenquelle (110) auf den mobilen Datenspeicher (154) des Probenträgers (108) übertragen werden, und dass bei Anordnen des Probenträgers (108) an der Trägerschnittstelle (136) der die Datenempfangseinrichtung (134) aufweisenden Bearbeitungs- und/oder Untersuchungsvorrichtung (100, 130) die Daten von dem mobilen Datenspeicher (154) des Probenträgers (108) an die Datenempfangseinrichtung (134) übertragen werden;
wobei der mobile Datenspeicher (154) als Transponder, insbesondere RFID-Tag, NFC-Tag oder Bluetooth-Transponder, als USB Stick, als SD-Karte oder Diskette ausgebildet ist.

13. Verfahren zum Bearbeiten und/oder Untersuchen einer Oberfläche einer Probe (107), wobei das Verfahren aufweist:
Bearbeiten und/oder Untersuchen eines Zielbereichs (104) an der Oberfläche der Probe (107) mittels einer ersten Bearbeitungs- und/oder Untersuchungsvorrichtung (100, 130), wobei ein Probenträger (108) mit der Probe (107) während des Bearbeitens und/oder Untersuchens an der ersten Bearbeitungs- und/oder Untersuchungsvorrichtung (100, 130) angebracht ist;
nachfolgend Überführen des Probenträgers (108) zu einer zweiten Bearbeitungs- und/oder Untersuchungsvorrichtung (100, 130) zum Bearbeiten und/oder Untersuchen des Zielbereichs (104); und
Übermitteln von für eine Position des Zielbereichs (104) indikativen Daten von der ersten Bearbeitungs- und/oder Untersuchungsvorrichtung (100, 130) an die zweite Bearbeitungs- und/oder Untersuchungsvorrichtung (100, 130);
wobei zumindest eine der ersten Bearbeitungs- und/oder Untersuchungsvorrichtung (100, 130) und der zweiten Bearbeitungs- und/oder Untersuchungsvorrichtung (100, 130) eine mechanische Trägerschnittstelle (106, 136) als mechanische Referenz mit vorbekannter Position zum abnehmbaren Anordnen des Probenträgers (108) daran aufweist.

14. Verfahren gemäß Anspruch 13, aufweisend zumindest eines der folgenden Merkmale:
wobei das Verfahren aufweist: während des Bearbeitens und/oder Untersuchens mittels der ersten Bearbeitungs- und/oder Untersuchungsvorrichtung (100, 130), Anordnen des Probenträgers (108) an einer als mechanische Referenz dienenden mechanischen Trägerschnittstelle (106) der ersten Bearbeitungs- und/oder Untersuchungsvorrichtung (100, 130), und während des Bearbeitens und/oder Untersuchens mittels der zweiten Bearbeitungs- und/oder Untersuchungsvorrichtung (100, 130), Anordnen des Probenträgers (108) an einer als mechanische Referenz dienenden mechanischen Trägerschnittstelle (136) der zweiten Bearbeitungs- und/oder Untersuchungsvorrichtung (100, 130);
während des Bearbeitens und/oder Untersuchens mittels der ersten Bearbeitungs- und/oder Untersuchungsvorrichtung (100, 130) oder während des Bearbeitens und/oder Untersuchens mittels der zweiten Bearbeitungs- und/oder Untersuchungsvorrichtung (100, 130), Anordnen eines Markierungen (120) aufweisenden Probenträgers (108) an einer als mechanische Referenz dienenden mechanischen Trägerschnittstelle (106, 136) der ersten Bearbeitungs- und/oder Untersuchungsvorrichtung (100, 130) oder der zweiten Bearbeitungs- und/oder Untersuchungsvorrichtung (100, 130), und während des jeweils anderen Prozesses des Bearbeitens und/oder Untersuchens, Anordnen des Markierungen (120) aufweisenden Probenträgers (108) an der ersten Bearbeitungs- und/oder Untersuchungsvorrichtung (100, 130) oder der zweiten Bearbeitungs- und/oder Untersuchungsvorrichtung (100, 130), die zum Auffinden der Zielposition nicht die mechanische Trägerschnittstelle als mechanische Referenz verwendet;
wobei das Verfahren ein Wiederauffinden des Zielbereichs (104) an der zweiten Bearbeitungs- und/oder Untersuchungsvorrichtung (100, 130) unter Verwendung der übermittelten Daten aufweist;
wobei das Verfahren ein Kalibrieren relativer Positionen innerhalb der ersten Bearbeitungs- und/oder Untersuchungsvorrichtung (100, 130) und/oder innerhalb der zweiten Bearbeitungs- und/oder Untersuchungsvorrichtung (100, 130) aufweist;
wobei das Verfahren ein Kalibrieren relativer Positionen zwischen der ersten Bearbeitungs- und/oder Untersuchungsvorrichtung (100, 130) und der zweiten Bearbeitungs- und/oder Untersuchungsvorrichtung (100, 130) aufweist;
wobei das Bearbeiten des Zielbereichs (104) ein Bilden einer Vertiefung an der Probe (107) und das Untersuchen des Zielbereichs (104) ein Untersuchen der Vertiefung aufweist;
wobei die Daten durch einen Benutzer von einer Benutzerschnittstelle (160) der ersten Bearbeitungs- und/oder Untersuchungsvorrichtung (100, 130) an eine Benutzerschnittstelle (162) der zweiten Bearbeitungs- und/oder Untersuchungsvorrichtung (100, 130) übertragen werden;
wobei die für die Position des Zielbereichs (104) indikativen Daten bezogen auf ein Koordinatensystem der besagten mechanischen Referenz übermittelt werden.

15. Verwendung zumindest einer Bearbeitungs- und/oder Untersuchungsvorrichtung (100, 130) gemäß einem der Ansprüche 1 bis 8 für zumindest eine der folgenden Operationen:
- Bearbeiten der Probe (107) an einer ersten Bearbeitungs- und/oder Untersuchungsvorrichtung (100, 130) und nachfolgend Untersuchen der Probe (107) an einer zweiten Bearbeitungs- und/oder Untersuchungsvorrichtung (100, 130);
- Bearbeiten der Probe (107) an einer ersten Bearbeitungs- und/oder Untersuchungsvorrichtung (100, 130) und nachfolgend Bearbeiten der Probe (107) an einer zweiten Bearbeitungs- und/oder Untersuchungsvorrichtung (100, 130);
- Untersuchen der Probe (107) an einer ersten Bearbeitungs- und/oder Untersuchungsvorrichtung (100, 130) und nachfolgend Untersuchen der Probe (107) an einer zweiten Bearbeitungs- und/oder Untersuchungsvorrichtung (100, 130);
- Untersuchen der Probe (107) an einer ersten Bearbeitungs- und/oder Untersuchungsvorrichtung (100, 130), nachfolgend Bearbeiten der Probe (107), insbesondere an einer zweiten Bearbeitungs- und/oder Untersuchungsvorrichtung (100, 130), und danach Untersuchen der Probe (107) an der ersten Bearbeitungs- und/oder Untersuchungsvorrichtung (100, 130) oder an einer dritten Bearbeitungs- und/oder Untersuchungsvorrichtung (100, 130).
